(19) **Europäisches Patentamt**
**European Patent Office**
**Office européen des brevets**

(11) **EP 0 932 986 B1**

(12) **EUROPEAN PATENT SPECIFICATION**

(45) Date of publication and mention
of the grant of the patent:
**01.10.2014 Bulletin 2014/40**

(51) Int Cl.:
*H04B 7/04* (2006.01)

(21) Application number: **97913745.2**

(86) International application number:
**PCT/US1997/019172**

(22) Date of filing: **17.10.1997**

(87) International publication number:
**WO 1998/018272 (30.04.1998 Gazette 1998/17)**

(54) **Spectrally efficient high capacity wireless communication systems with spatio-temporal processing**

Spektral effizientes schnurloses Kommunikationssystem hoher Kapazität mit Raum-Zeitverarbeitung

Systèmes de communications sans fil à grande capacite spectralement efficace avec traitement spatio-temporel

(84) Designated Contracting States:
**AT BE CH DE DK ES FI FR GB GR IE IT LI LU MC NL PT SE**
Designated Extension States:
**AL LT LV RO SI**

(30) Priority: **23.10.1996 US 735520**

(43) Date of publication of application:
**04.08.1999 Bulletin 1999/31**

(73) Proprietor: **Intel Corporation**
**Santa Clara, CA 95054 (US)**

(72) Inventors:
• **OTTERSTEN, Björn, E.**
**S-181 63 Lidingo (SE)**
• **BARRATT, Craig, H.**
**Redwood City, CA 94062 (US)**
• **PARISH, David, M.**
**Amherst, NY 14226 (US)**
• **ROY, Richard, H., III**
**Mountain View, CA 94040 (US)**

(74) Representative: **Goddar, Heinz J. et al**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
**WO-A-96/22662      WO-A-97/08849**
**US-A- 5 103 459      US-A- 5 260 968**

• **OTTERSTEN B: "Array processing for wireless communications" , PROCEEDINGS. 8TH IEEE SIGNAL PROCESSING WORKSHOP ON STATISTICAL SIGNAL AND ARRAY PROCESSING (CAT. NO.96TB100040), PROCEEDINGS OF 8TH WORKSHOP ON STATISTICAL SIGNAL AND ARRAY PROCESSING, CORFU, GREECE, 24-26 JUNE 1996 , 1996, LOS ALAMITOS, CA, USA, IEEE COMPUT. SOC. PRESS, USA, PAGE(S) 466 - 473 XP001032920 ISBN: 0-8186-7576-4 * abstract * * Section 2., * * Section 2.3 * * figure 4 ***
• **GERLACH D ET AL: "BASE STATION TRANSMITTER ANTENNA ARRAYS WITH MOBILE TO BASE FEEDBACK" PROCEEDINGS OF THE ASILOMAR CONFERENCE. PACIFIC GROVE, NOV. 1 - 3, 1993, NEW YORK, IEEE, US, vol. 2, 1 November 1993 (1993-11-01), pages 1432-1436, XP000438543**

**Description**

*Background of the Invention*

This invention relates to wireless communication systems and, more particularly, to using antenna arrays and signal processing to dramatically increase the capacity and performance of wireless communication systems.

Wireless communication systems can be used to complement and in some instances replace conventional wired communication systems in areas where conventional wire-line systems are unavailable, unreliable, or excessively expensive. Examples of such areas are: rural areas with a small number of widespread users, underdeveloped areas with little or no current infrastructure, reliability sensitive applications in areas where wired infrastructure is unreliable, and political environments where monopolistic wired service providers maintain artificially high prices. Even in metropolitan areas and highly developed countries, wireless communication systems may be used for low-cost ubiquitous communication, new flexible data services, and emergency communication systems. In general, wireless communication systems may be used for voice communications just like conventional telephone systems, and for data communications in a radio-based wide area or local area network as well.

Wireless users access wireless communication systems using remote terminals such as cellular telephones and data modems equipped with radio transceivers. Such systems (and in particular the remote terminals) have protocols for initiating calls, receiving calls, and general transfer of information. The information transfer can be performed in real-time such as is the case for circuit-switched voice conversations and faxes, or in a store-and-forward manner such as is often the case for electronic mail, paging and other similar message transfer systems.

Wireless communication systems are generally allocated a portion of the radio frequency spectrum for their operation. The allocated portion of the spectrum is divided up into communication channels. These channels may be distinguished by frequency, by time, by code, or by some combination of the above. Each of these communication channels will be referred to herein as a *channel*. In conventional communication systems, the channels are designed to be separate or non-overlapping (in time, frequency and/or code) this will be referred to herein as *conventional channels*. Herein, the channels share a common resourse, they may be non-overlapping, partially overlapping or full overlapping. Depending on the available frequency allocations, the wireless system might have from one to several hundred communication channels. To provide full-duplex communication links, typically some of the communication channels are used for communication from base stations to users' remote terminals (the downlink), and others are used for communication from users' remote terminals to base stations (the uplink).

Wireless communication systems generally have one or more radio base stations, each of which provide coverage to a geographic area known as a cell and often serve as a point-of-presence (PoP) providing connection to a wide area network such as a Public Switched Telephone Network (PSTN). Often a pre-determined subset of the available communication channels is assigned to each radio base station in an attempt to minimize the amount of interference experienced by users of the system. Within its cell, a radio base station can communicate simultaneously with many remote terminals by using different conventional communication channels for each remote terminal.

As aforementioned, base stations can act as PoPs, providing connection to one or more wired communication systems. Such systems include local data networks, wide area data networks, and PSTNs. Thus, remote users are provided access to local and/or wide area data services and the local public telephone system. Base stations can also be used to provide local connectivity without direct access to a wired network such as in local area emergency and mobile battlefield communication systems. Base stations can provide connectivity of various kinds as well. In the aforementioned examples, point-to-point communications where roughly equal amounts of information flow in both directions between two users were assumed. In other applications such as interactive television, information is broadcast to all users simultaneously, and responses from many of the remote units are to be processed at the base stations.

However, conventional wireless communication systems are comparatively spectrally inefficient. In conventional wireless communication systems, only one remote terminal can use any one conventional channel within a cell at any one time. If more than one remote terminal in a cell attempts to use the same channel at the same time, the downlink and uplink signals associated with the remote terminals interfere with each other. Since conventional receiver technology can not eliminate the interference in these combined uplink and downlink signals, remote terminals are unable to communicate effectively with the base station when interference is present. Thus, the total capacity of the system is limited by the number of conventional channels the base station has available, and in the overall system, by the way in which these channels are re-used among multiple cells. Consequently, conventional wireless systems are unable to provide capacity anywhere near that of wired communication systems.

In EP-A-0804858, we have previously disclosed using antenna arrays and signal processing to separate combinations of received (uplink) signals. We also disclosed using transmit spatially multiplexed downlink signals. The result is an increase in spectral efficiency, capacity, signal quality, and coverage of wireless communication systems. Capacity is increased by allowing multiple users to simultaneously share the same communication channel within a cell without interfering with one another, and further by allowing more frequent reuse of the same channel within a geographic area covering many cells. Signal quality and coverage area are improved through appropriate processing of signals received from and transmitted by multiple antenna elements. Moreover, a goal of invention described in EP-A-0804858 and herein is to provide capacity gains by dynamically allocating channels among base stations and remote terminals.

Briefly, EP-A-0804858 discloses antenna arrays and signal processing means for measuring, calculating, storing, and using *spatial signatures* of receivers and transmitters in wireless communication systems to increase system capacity, signal quality, and coverage, and to reduce overall system cost. The antenna array and signal processing means can be employed at base stations (PoPs) and remote terminals. Generally there can be different processing requirements at base stations where many signals are being concentrated than at remote terminals where in general only a limited number of communication links are being managed.

As an example, in a wireless local loop application, a particular base station might serve as a PoP for many remote terminals and employ the antenna array and signal processing described herein. Additionally, remote terminals could employ antenna arrays and signal processing to further improve their capacity and signal quality over simpler remote terminals that handle fewer communication links. Herein, the distinction between base stations and remote terminals is that base stations generally act as concentrators connecting to multiple remote units simultaneously, possibly providing a high capacity connection to a wide area network. While for the sake of clarity much of the ensuing discussion is couched in terms of simple remote terminals that do not employ antenna arrays, nothing herein should be interpreted as preventing such an application. Thus, while hereafter spatial signatures will be associated primarily with remote terminals, when antenna arrays are employed at remote terminals, base stations will have associated spatial signatures as well.

Briefly, as described in EP-A-0804858, there are two spatial signatures associated with each remote terminal/base station pair on a particular frequency channel, where for the purpose of this discussion it is assumed that only base stations have antenna arrays. Base stations associate with each remote terminal in their cell a spatial signature related to how that remote terminal receives signals transmitted to it by the base station's antenna array, and a second spatial signature related to how the base station's receive antenna array receives signals transmitted by the remote terminal. In a system with many channels, each remote terminal/base station pair has transmit and receive spatial signatures for each channel.

The receive spatial signature characterizes how the base station antenna array receives signals from the particular remote unit in a particular channel. In one embodiment, it is a complex vector containing responses (amplitude and phase with respect to a reference) of each the antenna element receivers., *i.e.*, for an *m*-element array,

$$\mathbf{h}_r = [\mathbf{h}_r^1, \mathbf{h}_r^2, \ldots, \mathbf{h}_r^m]^T , \qquad (1)$$

where $\mathbf{h}_r^i$ is the response of the $i^{\text{th}}$ receiver to a unit power transmitted signal from the remote terminal. Assuming that a narrowband signal $s_r(t)$ is transmitted from the remote terminal, the base station receiver outputs at time t are then given by

$$\mathbf{x}_r(t) = \mathbf{h}_r s_r(t - \tau) + \mathbf{n}_r(t) , \qquad (2)$$

where $\tau$ accounts for the mean propagation delay between the remote terminal and the base station antenna array, and $n_r(t)$ represents noise present in the environment and the receivers.

In EP-A-0804858 the transmit spatial signature characterizes how the remote terminal receives signals from each of the antenna array elements at the base station in a particular channel. In one embodiment, it is a complex vector containing relative amounts (amplitude and phase with respect to a reference) of each the antenna element transmitter outputs that are contained in the remote terminal receiver output, *i.e.*, for an *m*-element array,

$$\mathbf{h}_t = [\mathbf{h}_t^1, \mathbf{h}_t^2, \ldots, \mathbf{h}_t^m]^T , \qquad (3)$$

where $\mathbf{h}_t^i$ is the amplitude and phase (with respect to some fixed reference) of the remote terminal receiver output for a unit power signal transmitted from the $i^{\text{th}}$ element in the base station array. Assuming that a vector of complex signals

$s_t(t) = [s_{t1}(t),..., s_{tm}(t)]^T$ were transmitted from the antenna array, the output of the remote terminal receiver would be given by

$$z_t(t) = \mathbf{h}_t^T \mathbf{s}_t(t - \tau) + n_t(t),\qquad(4)$$

where $n_t(t)$ represents noise present in the environment and the receiver. These spatial signatures are calculated (estimated) and stored at each base station for each remote terminal in its cell and for each channel. For fixed remote terminals and base stations in stationary environments, the spatial signatures can be updated infrequently. In general, however, changes in the RF propagation environment between the base station and the remote terminal can alter the signatures and require that they be updated. Note that henceforth, the time argument in parentheses will be suppressed; integers inside parentheses will be used solely for indexing into vectors and matrices.

In the previous discussion, temporally matched receivers and transmitters were assumed. If there arc differences in the temporal responses, these can be equalized using temporal filtering techniques as is well-known. Furthermore, the channel bandwidths were assumed to be small compared to the center frequency of operation. Large bandwidth channels may require more than one complex vector to accurately describe, the outputs as is well known.

In EP-A-0804858 when more than one remote terminal wants to communicate at the same time, the signal processing means at the base station uses the spatial signatures of the remote terminals to determine if subsets of them can communicate with the base station simultaneously by sharing a channel. In a system with $m$ receive and $m$ transmit antenna elements, up to $m$ remote terminals can share the same channel at the same time.

When multiple remote terminals are sharing a single uplink channel, the multiple antenna elements at the base station each measure a combination of the arriving uplink signals and noise. These combinations result from the relative locations of the antenna elements, the locations of the remote terminals, and the RF propagation environment. The signal processing means calculates spatial demultiplexing weights to allow the uplink signals to be separated from the combinations of uplink signals measured by the multiple antenna elements.

In applications where different downlink signals are to be sent from the base station to the remote terminals, the signal processing means computes spatial multiplexing weights that are used to produce multiplexed downlink signals, which when transmitted from the antenna elements at the base station result in the correct downlink signal being received at each remote terminal with appropriate signal quality.

In applications where the same signal is to be transmitted from the base station to a large number (more than the number of antenna elements) of remote terminals, the signal processing means computes weights appropriate for broadcasting the signal, covering the area necessary to reach all the remote terminals.

Therefore in EP-A-0804858 the signal processing means facilitates simultaneous communication between a base station and multiple remote terminals on the same channel. The channel may be a frequency channel, a time slot in a time division multiplexed system, a code in a code division multiplexed system, or any combination of the above. In one embodiment, all elements of a single antenna array transmit and receive radio frequency signals, while in another embodiment the antenna array includes separate transmit antenna elements and receive antenna elements. The number of transmit and receive elements need not be the same.

When there are wideband channels and/or when there is significant delay spread or scattering, it is well known to use time equalization, and in EP-A-0804858 it is assumed that such time equalization, if required, is carried out after spatial demultiplexing. Channelization in FDMA (or CDMA) systems is the filtering to separate out the frequency (or code) channels, and is carried out before spatial processing. So decoupling the the spatial processing from the temporal processing such as equalization and channelization is most likely not optimal, and there may be performance advantages to combining the spatial and temporal processing. Techniques of combining spatial and temporal processing are described in Ottersten B. "Array processing for wireless communications". Thus there is a need in the art for methods and apparatus to define spatial and temporal processing together as a single spatio-temporal processing step, and for methods and apparatus for carrying out such spatio-temporal processing.

*Summary of the Invention*

The scope of the invention is defined by the appended independent claims.

Accordingly, an object of the present invention is to use antenna arrays and signal processing to separate combinations of received (uplink) signals using spatio-temporal signal processing. Another object of the present invention is to transmit spatially multiplexed downlink signals, the spatially multiplexed downlink signals determined by spatio-temporal processing.

Briefly, the invention comprises antenna arrays and signal processor for measuring, calculating, storing, and using *spatio-temporal signatures* of receivers and transmitters in wireless communication systems to increase system capacity, signal quality, and coverage, and to reduce overall system cost. The antenna array and signal processor can be used at base stations (PoPs) and remote terminals. Generally there can be different processing requirements at base stations where many signals are being concentrated than at remote terminals where in general only a limited number of communication links are being managed.

As an example, in a wireless local loop application, a particular base station might serve as a PoP for many remote terminals and use the antenna array and signal processing described herein. Additionally, remote terminals could use antenna arrays and signal processing to further improve their capacity and signal quality over simpler remote terminals that handle fewer communication links. As the terms are used herein, the distinction between base stations and remote terminals is that base stations generally act as concentrators connecting to multiple remote units simultaneously, possibly providing a high capacity connection to a wide area network. For simplicity, much of the description herein is for a system with simple remote terminals that do not use antenna arrays. However nothing herein should be interpreted as preventing such an application. Thus, while hereafter spatio-temporal signatures will be associated primarily with remote terminals, when antenna arrays are used at remote terminals, base stations will have associated spatio-temporal signatures as well.

The spatio-temporal signatures are calculated (estimated) and stored at each base station for each remote terminal in its cell and for each channel. For fixed remote terminals and base stations in stationary environments, the spatio-temporal signatures can be updated infrequently. In general, however, changes in the RF propagation environment between the base station and the remote terminal can alter the signatures and require that they be updated.

When more than one remote terminal wants to communicate at the same time, the signal processor at the base station uses the spatio-temporal signatures of the remote terminals to determine if subsets of them can communicate with the base station simultaneously by sharing channels.

When multiple remote terminals are using overlapping uplink channels, the multiple antenna elements at the base station each measure a combination of the arriving uplink signals and noise. These combinations result from the relative locations of the antenna elements, the locations of the remote terminals, the frequency characteristics of the receiver and transmitter, the spectral content of the signals, and the RF propagation environment. The signal processor calculates spatio-temporal demultiplexing weights to allow the uplink signals to be separated from the combinations of uplink signals measured by the multiple antenna elements.

In applications where different downlink signals are to be sent from the base station to the remote terminals, the signal processor computes spatio-temporal multiplexing weights that are used to produce multiplexed downlink signals, which when transmitted from the antenna elements at the base station result in the correct downlink signal being received at each remote terminal with appropriate signal quality.

In applications where the same signal is to be transmitted from the base station to a large number of remote terminals, the signal processor computes spatio-temporal transmit weights appropriate for broadcasting the signal, covering the area necessary to reach all the remote terminals.

Therefore, the signal processor facilitates simultaneous communication between a base station and multiple remote terminals on overlapping channels. The channel may be a frequency channel (frequency division multiple access, FDMA), a time slot in a time division multiplexed system (time division multiple access, TDMA), a code in a code division multiplexed system (code division multiple access, CDMA), or any combination of the above. The channel may also be composed of multiple conventional channels.

In one embodiment, all elements of a single antenna array transmit and receive radio frequency signals, while in another embodiment the antenna array includes separate transmit antenna elements and receive antenna elements. The number of transmit and receive elements need not be the same.

*Formulation and Notation*

There are two spatio-temporal signatures associated with each remote terminal/base station pair on a particular frequency channel, where for the purpose of this discussion it is assumed that only base stations have antenna arrays. Base stations associate with each remote terminal in their cell a transmit spatio-temporal signature related to how that remote terminal receives signals transmitted to it by the base station's antenna array, and a receive spatio-temporal signature related to how the base station's receive antenna array receives signals transmitted by the remote terminal. In a system with many channels, each remote terminal/base station pair has transmit and receive spatio-temporal signatures for each channel.

The receive spatio-temporal signature characterizes how the base station antenna array receives signals from the particular remote unit in a particular channel. In one embodiment, it is a matrix containing impulse responses of the antenna element receivers as described below.

Assume that a signal $s_r(t)$ is transmitted from the remote terminal. Let $m$ be the number of antennas and associated receivers at the base station. Then, in one embodiment the $m$ base station receiver outputs, at time $t$ can be

expressed as

$$\mathbf{x}_r(t) = \begin{bmatrix} x_{r1}(t) \\ x_{r2}(t) \\ \vdots \\ x_{rm}(t) \end{bmatrix} = \mathbf{h}_r s_r^{M_r}(t-\tau) + \mathbf{n}_r(t) , \qquad (5)$$

where

$$\mathbf{s}_r^{M_r}(t-\tau) = \begin{bmatrix} s_r(t-\tau) \\ s_r(t-T-\tau) \\ \vdots \\ s_r(t-(M_r-1)T-\tau) \end{bmatrix} , \qquad (6)$$

and $\mathbf{h}_r$ is the channel response matrix and is in this embodiment assumed to be accurately characterized by a finite impulse response filter. The mean propagation delay between the remote terminal and the base station antenna array is denoted by $\tau$, $T$ is the sampling time and is in this embodiment assumed to satisfy Nyquist's well known sampling theorem, $M_r$ is the length of the channel response, and $n_r(t)$ represents noise present in the environment and the receivers. The channel response at antenna element receiver i, is given by the row vector $h_r(i)$. The channel response matrix is the collection of the individual channel responses

$$\mathbf{h}_r = \begin{bmatrix} \mathbf{h}_r(1) \\ \vdots \\ \mathbf{h}_r(m) \end{bmatrix} . \qquad (7)$$

If the impulse response of the communication channel, antenna elements, receiver and transmitter filters is of length $M_r$, then the impulse response is equal to the channel response matrix, $h_r$. If the impulse response is of longer duration, the channel response matrix, $h_r$, is an approximation of the impulse response and the resulting error is then incorporated in the noise term $n_r(i)$. In one embodiment, the time-delayed receiver outputs, here termed the *spatio-temporal receive vector, $z_r(t)$*, is modeled by

$$\mathbf{z}_r(t) = \begin{bmatrix} \mathbf{x}_r(t) \\ \mathbf{x}_r(t-T) \\ \vdots \\ \mathbf{x}_r(t-T(L_r-1)) \end{bmatrix} = \mathbf{H}_r s_r^{M_r+L_r-1}(t-\tau) + \mathbf{e}_r(t) . \qquad (8)$$

where $L_r$ is the length of a sliding window

$$\mathbf{H}_r = \begin{bmatrix} \mathbf{h}_r & 0 & \cdots & 0 \\ 0 & \mathbf{h}_r & \cdots & 0 \\ 0 & \ddots & \ddots & 0 \\ 0 & \cdots & 0 & \mathbf{h}_r \end{bmatrix} \qquad \mathbf{e}_r(t) = \begin{bmatrix} \mathbf{n}_r(t) \\ \mathbf{n}_r(t-T) \\ \vdots \\ \mathbf{n}_r(t-T(L_r-1)) \end{bmatrix} . \qquad (9)$$

6

The $mL_r$ by $(M_r + L_r - 1)$ matrix $H_r$ is called the receive spatio-temporal signature for the remote terminal transmitting $s_i(t)$ at the base station receiving $z_r(t)$ on a particular channel.

When a plurality of remote terminals are active on the same channel, the individual receive spatio-temporal signatures are collected in the *demultiplexing spatio-temporal signature matrix, $H_r$.* For each channel, $H_r$ is formed from the individual spatio-temporal receive signatures

$$\mathcal{H}_r = [\mathbf{H}_r^1, \mathbf{H}_r^2, \cdots, \mathbf{H}_r^{n_r}], \qquad\qquad (10)$$

where $\mathbf{H}_r^i$ is the receive spatio-temporal signature, as shown in equation (9), for $i^{th}$ remote terminal currently active on the channel and $n_r$ is the total number of remote terminals on the channel.

Note that when the channel response length is one, $M_r = 1$, and the sliding window length is also one, $L_r = 1$, this spatio-temporal signature corresponds to the spatial signature as described in EP-A-0804858.

For this case, the channel response matrix, $h_r$, is a column vector and the receive vector has the form

$$\mathbf{z}_r(t) = \mathbf{h}_r s_r(t - \tau) + \mathbf{n}_r(t) \ . \qquad\qquad (11)$$

This is an appropriate model for narrow band communication signals in a propagation environment with limited time-delay spread. For this case, spatial processing may be used in designing a high capacity wireless communication system as described in EP-A-0804858.

Another special case of the model above is obtain by letting the number of antennas be equal to one, $m = 1$, and letting the sliding window length also be one, $L_r = 1$. The single receiver output is then given by

$$\mathbf{z}_r(t) = \mathbf{h}_r(1) s_r^{M_r}(t - \tau) + \mathbf{n}_r(t) \ . \qquad\qquad (12)$$

This model corresponds to the often used discrete time representation of a time dispersive communication channel. The channel is modeled by a finite impulse response filter of length $M_r$. For this case, temporal processing may be applied to counter act the effects of the communication channel. How to apply such temporal processing for the single antenna case is well known in the art.

The model presented in (8) incorporates both the spatial and the temporal dimensions of a communication channel.

Consider now the communication channel from the base station to the remote terminal. The *transmit spatio-temporal signature* characterizes how the remote terminal receives signals from each of the antenna array elements at the base station in a particular channel. In one embodiment, it is a complex matrix containing the impulse responses from the antenna element transmitter outputs to the remote terminal receiver output as will be described below.

Let the matrix $h_t$ be the channel response matrix from the base station transmitters to the remote terminal. The $i^{th}$ row of the matrix $h_t$ is the channel response from transmitter $i_t$ to the remote terminal. The maximum length of the channel responses is $M_t$. If the impulse response of the communication channel, antenna element, transmit and receive filters is of length $M_t$, then the impulse response of the channel is equal to the channel response. If the impulse response is of longer duration, the channel response is an approximation of the impulse response matrix. Let $s_{ti}(t)$ be the complex signal transmitted from the $i^{th}$ base station antenna and let

$$\mathbf{s}_t(t) = \begin{bmatrix} s_{t1}(t) \\ s_{t2}(t) \\ \vdots \\ s_{tm}(t) \end{bmatrix} \ . \qquad\qquad (13)$$

The remote terminal receiver output, $z_t(t)$, is now given by

$$z_t(t) = \left[\mathbf{h}_t^T(1) \; \cdots \; \mathbf{h}_t^T(M_t)\right] \mathbf{s}_t^{M_t}(t - \tau) + n_t(t) \tag{14}$$

where

$$\mathbf{s}_t^{M_t}(t) = \begin{bmatrix} \mathbf{s}_t(t) \\ \mathbf{s}_t(t - T) \\ \vdots \\ \mathbf{s}_t(t - (M_t - 1)T) \end{bmatrix} \qquad \mathbf{h}_t = [\mathbf{h}_t(1), \mathbf{h}_t(2), \ldots, \mathbf{h}_t(M_t)], \tag{15}$$

when the signals $s_t(t)$ are transmitted from the base station antenna array. The term $n_t(t)$ represents noise and interference present in the environment and the receiver and model errors.

Consider now the case when the signal $s_t(t)$ at the base station is constructed from a scalar signal, $d(t)$,

$$\mathbf{s}_t(t) = \overrightarrow{\mathbf{W}_{tx}^*} \mathbf{d}^{L_t}(t) \tag{16}$$

where $\overline{W}_{ts}$ is the $L_t \times m$ *multiplexing weight matrix* composed of complex scalars, $(\cdot)^*$ is the complex conjugate transpose of a matrix, and

$$\mathbf{d}^{L_t}(t) = \begin{bmatrix} d(t) \\ \vdots \\ d(t - (L_t - 1)T) \end{bmatrix}. \tag{17}$$

The following relation then holds

$$\mathbf{s}_t^{M_t}(t) = \begin{bmatrix} s(t) \\ \vdots \\ s(t - (M_t - 1)T) \end{bmatrix} = \begin{bmatrix} \overrightarrow{\mathbf{W}_{tx}^*} & 0 & \cdots & 0 \\ 0 & \overrightarrow{\mathbf{W}_{tx}^*} & \cdots & 0 \\ 0 & \ddots & \ddots & 0 \\ 0 & \cdots & 0 & \overrightarrow{\mathbf{W}_{tx}^*} \end{bmatrix} \begin{bmatrix} d(t) \\ \vdots \\ d(t - (M_t + L_t - 2)T) \end{bmatrix}. \tag{18}$$

Use equation (18) above in equation (14) to express the signal received at the terminal $z_t(t)$ in terms of the signal $d(t)$ sent from the base station

$$z_t(t) = \left[\mathbf{h}_t^T(1) \cdots \mathbf{h}_t^T(M_t)\right] \begin{bmatrix} \overrightarrow{\mathbf{W}_{tx}^*} & 0 & \cdots & 0 \\ 0 & \overrightarrow{\mathbf{W}_{tx}^*} & \cdots & 0 \\ 0 & \ddots & \ddots & 0 \\ 0 & \cdots & 0 & \overrightarrow{\mathbf{W}_{tx}^*} \end{bmatrix} \mathbf{d}^{M_t + L_t - 1}(t - \tau) + n_t(t). \tag{19}$$

It is straight forward to rewrite equation (19) into the following form

$$z_t(t) = \mathbf{w}_{tx}^* \mathbf{H}_t \mathbf{d}^{M_t + L_t - 1}(t - \tau) + n_t(t) \, , \tag{20}$$

where

$$\mathbf{w}_{tx} = \begin{bmatrix} w_{tx}^T(1) \\ \vdots \\ w_{tx}^T(L_t) \end{bmatrix} \text{ is } (mL_t \times 1), \quad \overline{\mathbf{W}}_{tx} = \begin{bmatrix} w_{tx}(1) \\ \vdots \\ w_{tx}(L_t) \end{bmatrix} \text{ is } (L_t \times m) \, , \tag{21}$$

and

$$\mathbf{H}_t = \begin{bmatrix} \mathbf{h}_t & 0 & \cdots & 0 \\ 0 & \mathbf{h}_t & \cdots & 0 \\ 0 & \ddots & \ddots & 0 \\ 0 & \cdots & 0 & \mathbf{h}_t \end{bmatrix} \, . \tag{22}$$

The transmit *spatio-temporal signature,* $\mathbf{H}_t$, is an $mL_t$ x $(M_t + L_t{-}1)$ matrix that describes the relation between the *spatio-temporal transmit vector,* $\mathbf{d}^{M_t + L_t{-}1}(t)$, and the received signal, $z_t(t)$, at the remote terminal.

When a plurality of remote terminals are active on the same channel, the individual transmit spatio-temporal signatures are collection in the *multiplexing spatio-temporal signature matrix,* $H_t$. For each channel, $H_t$, is formed using the transmit spatio-temporal signatures:

$$\mathcal{H}_t = \left[ \mathbf{H}_t^1, \mathbf{H}_t^2, \cdots, \mathbf{H}_t^{n_t} \right] \, , \tag{23}$$

where $\mathbf{H}_t^i$ is the transmit spatio-temporal signature, as shown in equation (22), for the $i^{th}$ remote terminal currently active on the channel and $n_t$ is the total number of remote terminals on the channel.

Note that henceforth, the sampling time $T$ is assumed to be unity without loss of generality.

*Brief Description of The Drawings*

Figure 1 is a functional block diagram of a base station in accordance with one embodiment, of the invention.
Figure 2 is a functional block diagram of multichannel receivers in the base station.
Figure 3 is a functional block diagram of a spatio-temporal demultiplexer in the base station.
Figure 4 is a functional block diagram of a temporal filter of the spatio-temporal demultiplexer in the base station.
Figure 5 is a functional block diagram of a spatio-temporal multiplexer in the base station.
Figure 7 is a functional block diagram of a multichannel transmitter in the base station.
Figure 8 is a functional block diagram of a spatio-temporal processor in the base station.
Figure 9 is a functional block diagram of a remote terminal with a transponder switch.
Figure 10 is a functional block diagram of a remote terminal.
Figure 11 is a schematic diagram of a network system comprised of three base stations and a multiple base station controller.

*List of Preference Numerals*

1. base station
2. base station communication link
3. base station controller
4. demodulated received signal
5. separated uplink signals
6. received signal measurements
7. demultiplexing weights
8. data to be transmitted directionally
9. modulated signal to be multiplexed for transmission
10. modulated, multiplexed signals to be transmitted
11. base station calibration signals to be transmitted
12. multiplexing weights
13. spatio-temporal processor
14. multichannel transmitters
15. multichannel receivers
16a. multichannel receiver
16m. multichannel receiver
17a. multichannel transmitter
17m. multichannel transmitter
18a. transmit antenna
18m. transmit antenna
19a. receive antenna
19m. receive antenna
20. spatio-temporal demultiplexer
21. adder
22a. temporal filter
22i. temporal filter
22m. temporal filter
23. spatio-temporal multiplexer
24. signal modulator
25. signal demodulator
26a, multipliers
26b. multipliers
26L. multipliers
27a. sample delay
27b. sample delay
27L. sample delay
28. adder
29a. temporal filters
29i. temporal filters
29m. temporal filters
30a. multipliers
30b. multipliers
30L. multipliers
31a. sample delay
31b. sample delay
31L. sample delay
32. adder
33. spatio-temporal control data
34. spatio-temporal parameter data
35. common receiver oscillator
36. receiver control data
37: transmitter control data
38. common transmitter oscillator

39. spatio-temporal processor controller
40. active remote terminal list
41. channel selector
42. remote terminal database
43. spatio-temporal weight processor
44. spatio-temporal signature processor
45. remote terminal antenna
46. remote terminal duplexer
47. remote terminal duplexer output
48. remote terminal receiver
49. remote terminal received signal
50. remote terminal received calibration signal
51. remote terminal demodulator
52. remote terminal demodulated data
53. remote terminal keyboard and keyboard controller
54. remote terminal keyboard data
55. remote terminal display data
56. remote terminal display and display controller
57. remote terminal modulator
58. remote terminal data to be transmitted
59. remote terminal modulated data to be transmitted
60. remote terminal transmitter
61. remote terminal transmitter output
62. remote terminal transmitter control data
63. remote terminal receiver control data
64. remote terminal microphone
65. remote terminal microphone signal
66. remote terminal speaker
67. remote terminal speaker signal
68. remote terminal central processing unit
69. remote terminal transponder switch
70. remote terminal transponder switch control
71. wide area network
72. multiple base station controller
73a. cell boundary
73b. cell boundary
73c. cell boundary
74. high speed message link
75. remote terminal

*Description of Invention*

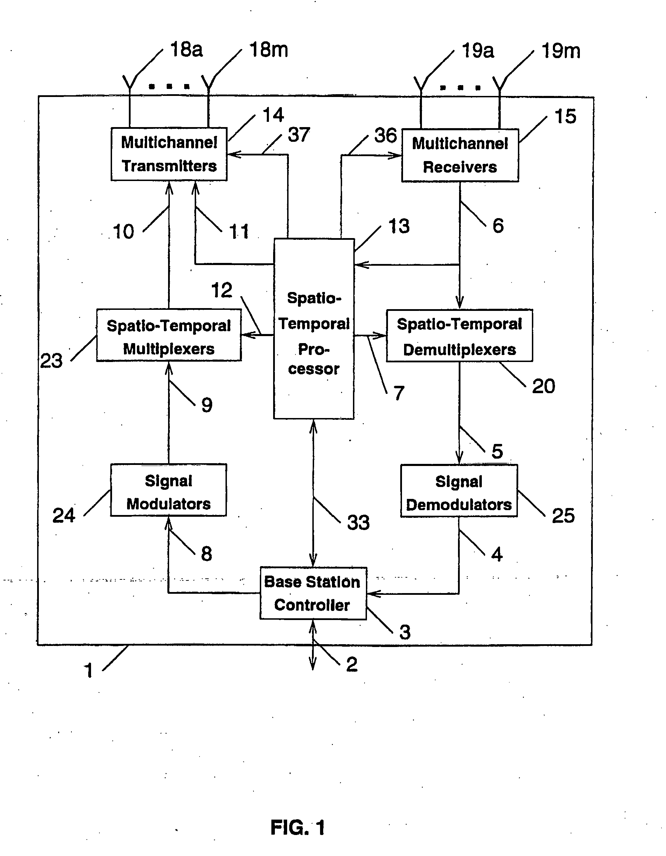

Figure 1 depicts the preferred embodiment of a base station 1. A base station controller 3 acts as an interface between base station 1 and any external connection via a base station communication link 2, and serves to coordinate the overall operation of base station 1. In the preferred embodiment, base station controller 3 is implemented with a conventional central processing unit and associated memory and programming.

Incoming or uplink radio transmissions impinge on an antenna array composed of a number, m, of receive antenna elements 19(a,... ,m) each of whose outputs is connected to one of *m* multichannel receivers in a bank of phase-coherent multichannel receivers 15.

The illustrative embodiment describes a conventional frequency division multiple access (FDMA) system. Each multichannel receiver is capable of handling multiple frequency channels. The symbol $N_{cc}$ will be used to reference the maximum number of conventional frequency channels that can be handled by the receivers. Depending on the frequencies allocated for the operation of the wireless communication system and the bandwidths chosen for particular communication links, $N_{cc}$ could be as small as one (a single frequency channel) or as large as thousands. In alternate embodiments, multichannel receivers 15 might instead handle multiple time slots, multiple codes, or some combination of these well known multiple access techniques. In an alternative embodiment, the channels may be composed of multiple conventional channels.

In each channel, receive antenna elements 19(a,...,m) each measure a combination of the arriving uplink signals from the remote terminals sharing this channel. These combinations result from the relative locations of the antenna elements, the locations of the remote terminals, the frequency characteristics of the receiver and transmitter, the spectral content of the signals, and the RF propagation environment, and are given by equation (5).

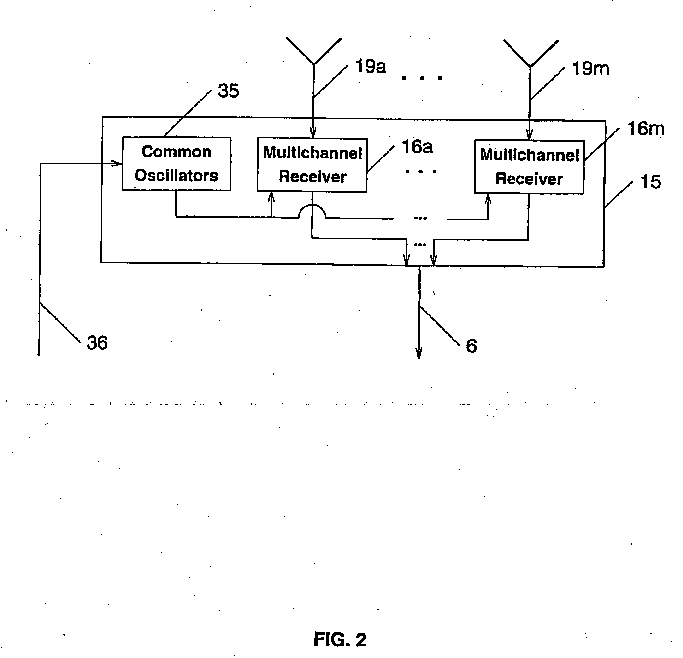

Figure 2 depicts individual multichannel receivers 16(a, ... ,m) with antenna element connections, common local receiver oscillators 35, one for each frequency channel to be used at that base station, and received signal measurements 6. Common local receiver oscillators 35 ensure that the signals from receive antenna elements 19(a, ... ,m) are coherently down-converted to baseband; its $N_{cc}$ frequencies are set so that multichannel receivers 16(a, ... ,m) extract all $N_{cc}$ frequency channels of interest. The frequencies of common local receiver oscillators 35 are controlled by a spatio-temporal processor 13 (figure 1) via receiver control data 36. In an alternate embodiment, where multiple frequency channels are all contained in a contiguous frequency band, a common local oscillator is used to down-convert the entire band which is then digitized, and digital filters and decimators extract the desired subset of channels using well known techniques.

The illustrative embodiment describes a FDMA system. In a TDMA or CDMA system, common oscillators 35 would be augmented to relay common time slot or common code signals respectively from spatio-temporal processor 13, via receiver control data 36, to multichannel receivers 16(a, ...,m). In these embodiments, multichannel receivers 16(a, ... ,m) perform selection of conventional time division channels or conventional code division channels in addition to down conversion to baseband.

Referring again to Figure 1, multichannel receivers 15 produce received signal measurements 6 which are supplied to spatio-temporal processor 13 and to a set of spatio-temporal demultiplexers 20. In this embodiment, received signal measurements 6 contain $m$ complex baseband signals for each of $N_{cc}$ frequency channels.

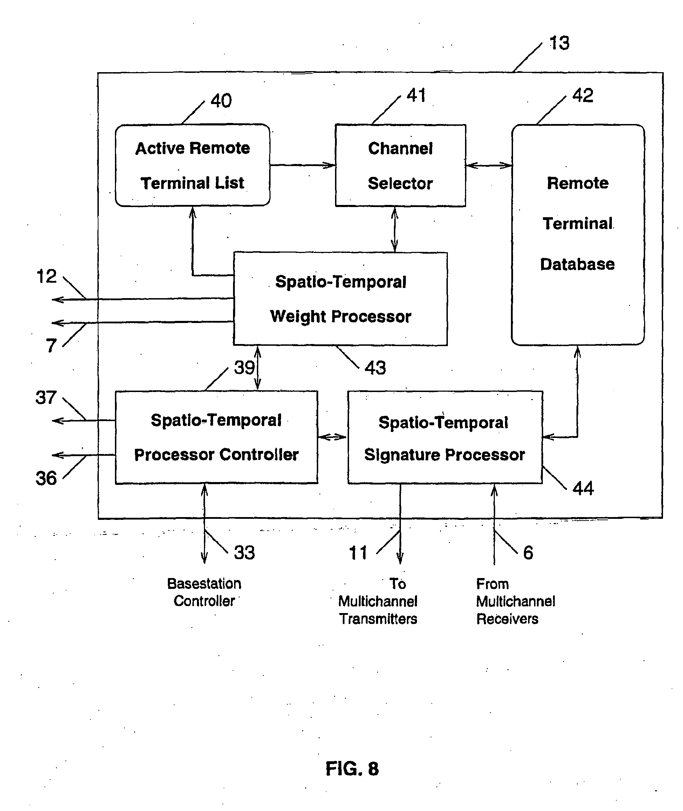

Figure 8 shows a more detailed block diagram of spatio-temporal processor 13. Spatio-temporal processor 13 produces and maintains spatio-temporal signatures for each remote terminal for each frequency channel, and calculates spatio-temporal multiplexing and demultiplexing weights for use by spatio-temporal demultiplexers 20 and spatio-temporal multiplexers 23. In the preferred embodiment, spatio-temporal processor 13 is implemented using a digital signal processor (DSP) device which includes a conventional central processing unit. Received signal measurements 6 go into a spatio-temporal signature processor 44 which estimates and updates spatio-temporal signatures. Spatio-temporal signatures are stored in a spatio-temporal signature list in a remote terminal database 42 and are used by channel selector 41 and spatio-temporal weight processor 43, which also produces demultiplexing weights 7 and multiplexing weights 12. A spatio-temporal processor controller 39 connects to spatio-temporal weight processor 43 and also produces receiver control data 36 transmitter control data 37 and spatio-temporal control data 33.

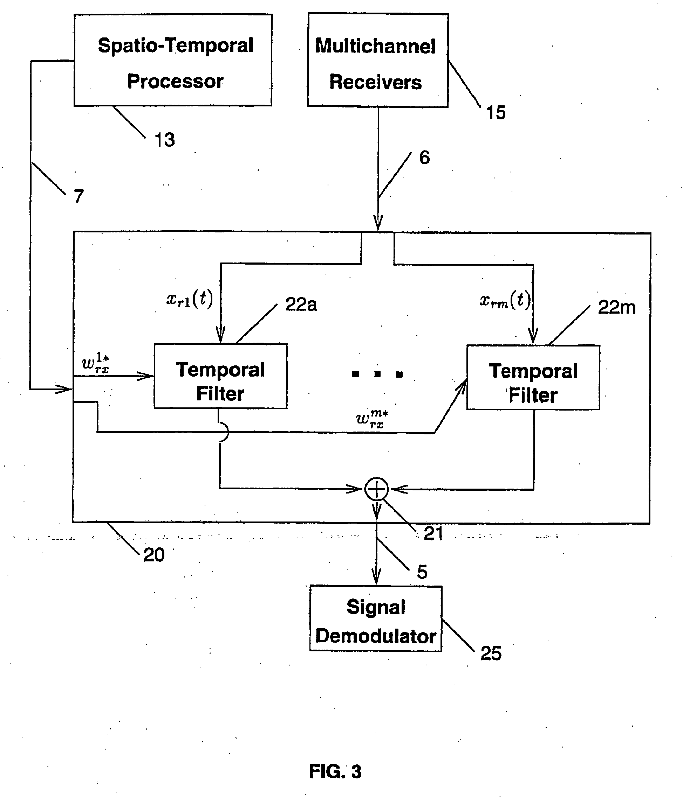

Referring again to Figure 8, the spatio-temporal demultiplexers 20 combine received signal measurements 6 according to the spatio-temporal demultiplexing weights 7. Figure 3 shows a spatio-temporal demultiplexer 20 for a single channel. In figure 3, $x_{ri}$ denotes the $i^{th}$ component of the receive measurement vector 6 for a single channel, and $w_{rx}^{i*}$ denotes the complex conjugate transpose of the $i^{th}$ column of the demultiplexing weight matrix.

$$\overline{\mathbf{W}}_{rx} = [w_{rx}^1, w_{rx}^2, \cdots, w_{rx}^m] = \begin{bmatrix} w_{rx}(1) \\ \vdots \\ w_{rx}(L_r) \end{bmatrix} \tag{24}$$

for a remote terminal using this channel.

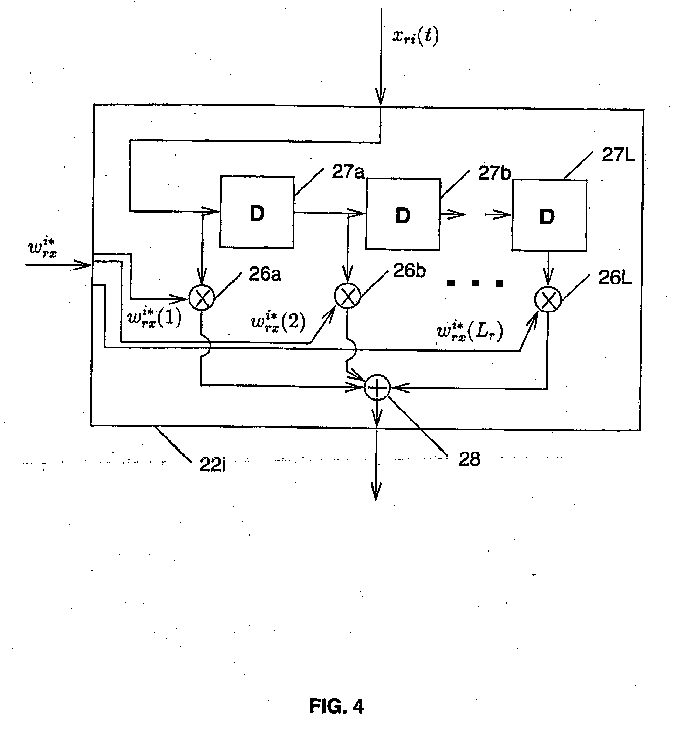

Figure 4 illustrates the processing of the $i^{th}$ received signal $x_{ri}$ for a single channel. In this embodiment, arithmetic operations in temporal filters 22(a, ... ,m) are carried out using general purpose arithmetic chips. In figure 4, $x_{ri}$ denotes the $i^{th}$ component of the receive measurement vector 6 for a single channel, and $w_{rx}^{i*}(j)$ denotes the complex conjugate of the $j^{th}$ component of the $i^{th}$ vector component of the spatio-temporal demultiplexing weight vector 7

$$\mathbf{w}_{rx} = \begin{bmatrix} w_{rx}^T(1) \\ \vdots \\ w_{rx}^T(L_r) \end{bmatrix} \quad w_{rx}(j) = [w_{rx}^1(j), \cdots, w_{rx}^m(j)] \tag{25}$$

for a remote terminal using this channel.

For each remote terminal on each channel, the $i^{th}$ temporal filter 22i computes

$$w_{rx}^{i*}(1)x_{ri}(t) + w_{rx}^{i*}(2)x_{ri}(t-T) + \ldots + w_{rx}^{i*}(L_r)x_{ri}(t-T(L_r-1)) . \tag{26}$$

The multiplication is performed by multipliers 26(a, b, ... ,L), and the addition is performed by adder 28. For each remote terminal on each channel, the spatio-temporal demultiplexer 20 adds the outputs of the temporal filters 22(a, ...,m) using adder 21 thus outputing

$$\mathbf{w}_{rx}^* z_r(t) . \tag{27}$$

For each remote terminal on each channel, the output of adder 21 given by equation (27) comprises the separated uplink signals 5.

Referring again to Figure 1, the outputs of spatio-temporal demultiplexers 20 are the separated uplink signals 5 for each remote terminal communicating with the base station. The separated uplink signals 5 are demodulated by signal demodulators 25, producing demodulated received signals 4 for each remote terminal communicating with the base station. Demodulated received signals 4 and corresponding spatio-temporal control data 33 are available to base station controller 3.

In an alternate embodiment, the demultiplexing and demodulation processing are performed together in a nonlinear multidimensional signal processing unit.

In embodiments where channel coding of the signals sent by remote terminals is performed, base station controller 3 sends the demodulated received signals 4 to spatio-temporal processor 13 which, using well known decoding techniques, estimates Bit-Error-Rates (BERs) and compares them against acceptable thresholds stored in the remote terminal database 42. If the BERs are unacceptable, spatio-temporal processor 13 reallocates resources so as to alleviate the problem. In one embodiment, links with unacceptable BERs are assigned to new channels using the same strategy as adding a new user with the exception that the current channel is not acceptable unless the current set of users of that particular channel changes. Additionally, recalibration of the receive signature for that remote terminal/base station pair is performed when that channel is available.

For transmission, signal modulators 24 produce modulated signals 9 for each remote terminal the base station is transmitting to, and a set of spatio-temporal multiplexing weights 12 for each remote terminal are applied to the respective time-delayed versions of the modulated signals in spatio-temporal multiplexers 23 to produce multiplexed signals to be transmitted 10 for each of the m transmit antennas 18(a,... ,m) and each of the $N_{cc}$ channels.

In the illustrative embodiment the number $N_{cc}$ of downlink channels is the same as the number $N_{cc}$ of uplink channels. In other embodiments, there may be different numbers of uplink and downlink channels. Furthermore, the channels may be of different types and bandwidths as is the case for an interactive television application where the downlink is comprised of wideband video channels and the uplink employs narrowband audio/data channels.

Additionally, the illustrative embodiment shows the same number of antenna elements, m, for transmit and receive. In other embodiments, the number of transmit antenna elements and the number of receive antenna elements may be different, up to and including the case where transmit employs only one transmit antenna element in an omnidirectional sense such as in an interactive television application.

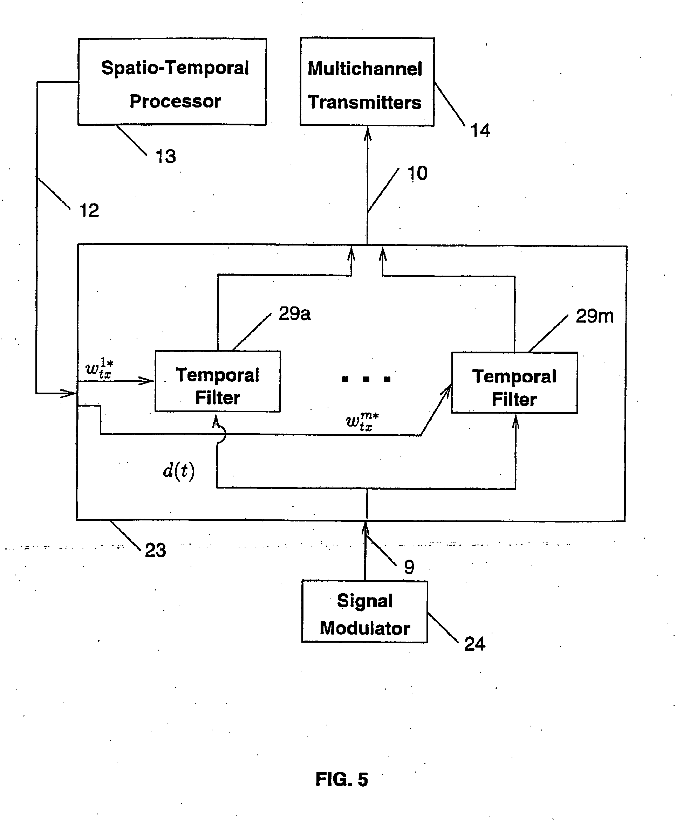

Figure 5 shows the spatio-temporal multiplexer for one remote terminal on a particular channel. Arithmetic operations in spatio-temporal multiplexer 23 are carried out using general purpose arithmetic chips. The component of modulated signals 9 destined for this remote terminal on this channel is denoted by $d(t)$ and the multiplexing weight vector is denoted by $\mathbf{w}_{tx}$. The multiplexing weight vector, $\mathbf{w}_{tx}$, is related to the multiplexing weight matrix, $\overline{\mathbf{W}}_{tx}$, through

$$\mathbf{w}_{tx} = \begin{bmatrix} w_{tx}^T(1) \\ \vdots \\ w_{tx}^T(L_t) \end{bmatrix} \text{ is } (mL_t \times 1) \quad \overline{\mathbf{W}}_{tx} = \begin{bmatrix} w_{tx}(1) \\ \vdots \\ w_{tx}(L_t) \end{bmatrix} \text{ is } (L_t \times m) , \tag{28}$$

For each remote terminal on each channel, the spatio-temporal multiplexer 23 computes the product of its multiplexing weight matrix 12 with delayed versions of the modulated signal $d(t)$ 9:

$$s_t(t) = \overline{\mathbf{W}}_{tx}^* \mathbf{d}^{L_t}(t) = \begin{bmatrix} w_{tx}(1) \\ \vdots \\ w_{tx}(L_t) \end{bmatrix}^* \begin{bmatrix} d(t) \\ \vdots \\ d(t - (L_t - 1)T) \end{bmatrix}. \qquad (29)$$

The temporal filters 29(a,...,m) compute the products of the rows of the multiplexing weight matrix with delayed versions of the modulated signal $d(t)$ 9. For each remote terminal on each channel, the $i^{th}$ temporal filter 29i computes

$$w_{tx}^{i*}(1)d(t) + w_{tx}^{i*}(2)d(t - T) + \ldots + w_{tx}^{i*}(L_t)d(t - T(L_t - 1)). \qquad (30)$$

The multiplication is performed by multipliers 30(a,b,... ,L), and the addition is performed by adder 32. For each channel, equation (29) is evaluated by the spatio-temporal multiplexer 23 for each remote terminal that is being transmitted to on this channel. Corresponding to each remote terminal is a different multiplexing weight vector, multiplexing weight matrix, and modulated signal. For each channel, spatio-temporal multiplexer 23 adds the multiplexed signals for each remote terminal being transmitted to on this channel, producing modulated and multiplexed signals 10, $s_t(t)$, that are the signals to be transmitted for each downlink channel from each antenna.

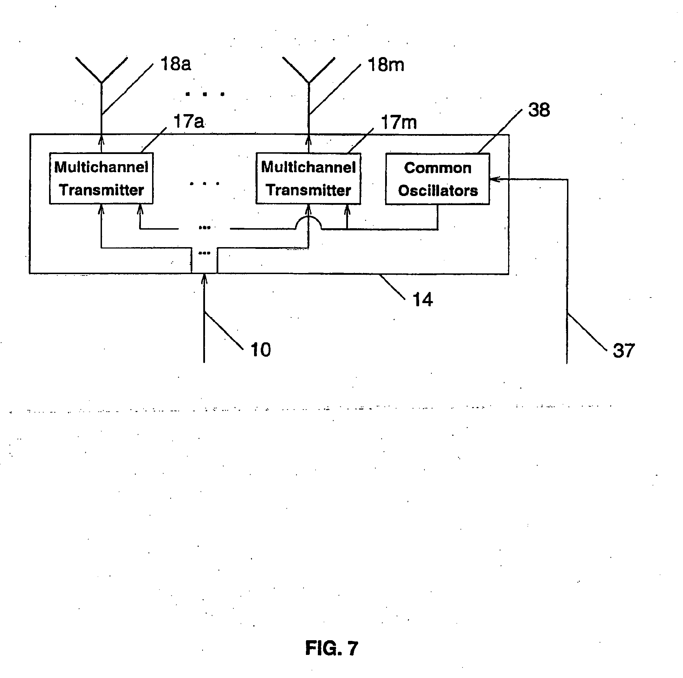

Modulated and multiplexed signals 10 are inputs to a bank of $m$ phase coherent multichannel transmitters 14. Figure 7 depicts multichannel transmitters 17(a, ... ,m) with antenna connections, common local transmitter oscillators 38, and digital inputs 10. Common local transmitter oscillators 38 ensure that the relative phases of multiplexed signals 10 are preserved during transmission by transmit antennas 18(a, ...,m). The frequencies of common local transmitter oscillators 38 are controlled by spatio-temporal processor 13 (see figure 1) via transmitter control data 37.

In an alternate embodiment, spatio-temporal multiplexer 23 uses well known baseband multiplexing techniques to multiplex all the calculated channel signals to be transmitted into a single wideband signal to be up-converted and transmitted by each of the multichannel transmitters 17(a, ... ,m). The multiplexing can be performed either digitally or in analog as appropriate.

The illustrative embodiment shows a system with multiple frequency channels. In a time division multiple access or code division multiple access system, common oscillators 38 would be augmented to relay common time slot or common code signals respectively from spatio-temporal processor 13, via transmitter control data 37, to multichannel transmitters 17(a, ...,m).

Referring again to figure 1, in applications where transmit spatio-temporal signatures are required, spatio-temporal processor 13 is also able to transmit predetermined calibration signals 11 for each antenna on a particular downlink channel. Spatio-temporal processor 13 instructs multichannel transmitters 17(a, ... ,m), via transmitter control data 37, to transmit predetermined calibration signals 11 in place of the multiplexed signals 10 for a particular downlink channel. This is one mechanism used for determining the transmit spatio-temporal signatures of the remote terminals on this downlink channel.

In alternate embodiments where well known channel coding techniques are used to encode the signals to be transmitted to remote terminals, remote terminals employ well known decoding techniques to estimate BERs which are then reported back to the base station on their uplink channel. If these BERs exceed acceptable limits, corrective action is taken. In one embodiment, the corrective active involves reallocating resources by using the same strategy as adding a new user with the exception that the current channel is not acceptable unless the current set of users of that particular channel changes. Additionally, recalibration of the transmit signature for that remote terminal/base station pair is performed when that channel is available.

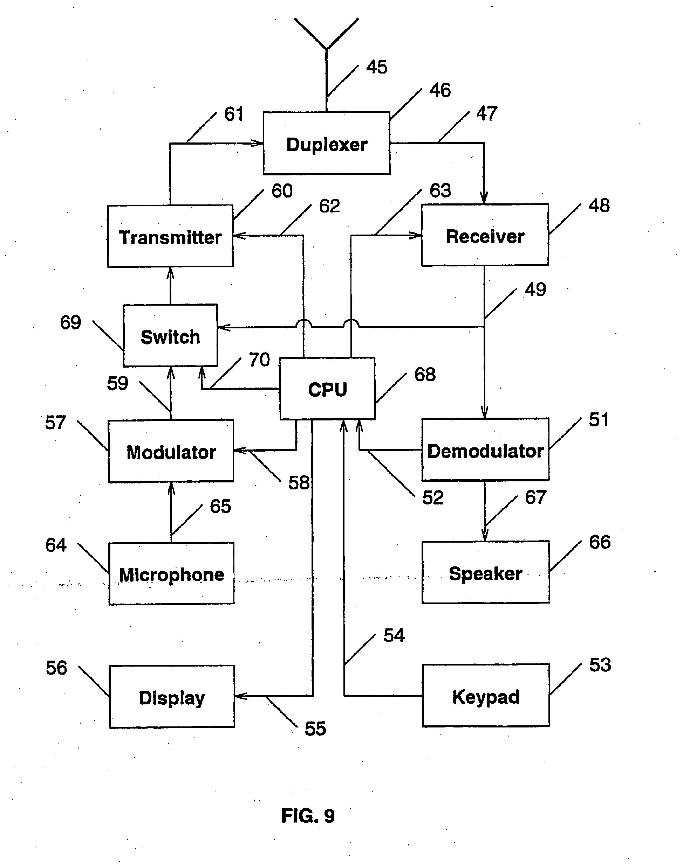

Figure 9 depicts the component arrangement in a remote terminal that provides voice communication. The remote terminal's antenna 45 is connected to a duplexer 46 to permit antenna 45 to be used for both transmission and reception. In an alternate embodiment, separate receive and transmit antennas are used eliminating the need for duplexer 46. In another alternate embodiment where reception and transmission occur on the same frequency channel but at different times, a transmit/receive (TR) switch is used instead of a duplexer as is well known. Duplexer output 47 serves as input to a receiver 48. Receiver 48 produces a down-converted signal 49 which is the input to a demodulator 51. A demodulated received voice signal 67 is input to a speaker 66.

Demodulated received control data 52 is supplied to a remote terminal central processing unit 68 (CPU). Demodulated received control data 52 is used for receiving data from base station 1 during call setup and termination, and in an alternate embodiment, for determining the quality (BER) of the signals being received by the remote terminal for transmission back to the base station as described above.

Remote terminal CPU 68 is implemented with a standard DSP device. Remote terminal CPU 68 also produces receiver control data 63 for selecting the remote terminal's reception channel, transmitter control data 62 for setting the remote terminal's transmission channel and power level, control data to be transmitted 58, and display data 55 for remote terminal display 56. Remote terminal CPU 68 also receives keyboard data 54 from remote terminal keyboard 53.

The remote terminal's voice signal to be transmitted 65 from microphone 64 is input to a modulator 57. Control data to be transmitted 58 is supplied by remote terminal CPU 68. Control data to be transmitted 58 is used for transmitting data to base station 1 during call setup and termination as well as for transmitting information during the call such as measures of call quality (*e.g.,* bit error rates (BERs)). The modulated signal to be transmitted 59, output by modulator 57, is up-converted and amplified by a transmitter 60, producing a transmitter output signal 61. Transmitter output 61 is then input to duplexer 46 for transmission by antenna 45.

In an alternate embodiment, the remote terminal provides digital data communication. Demodulated received voice signal 67, speaker 66, microphone 64, and voice signal to be transmitted 65 are replaced by digital interfaces well-known in the art that allow data to be transmitted to and from an external data processing device (for example, a computer).

Referring again to figure 9, the remote terminal allows received data 49 to be transmitted back to base station 1 via switch 69 controlled by remote terminal CPU 68 through switch control signal 70. In normal operation, switch 69 drives transmitter 60 with modulated signal 59 of modulator 57. When the remote terminal is instructed by base station 1 to enter calibration mode, the remote terminal CPU 68 send a predetermined calibration signal 58 to the modulator 57 in place of the remote terminal microphone signal 65. This is one mechanism used for determining the receive spatio-temporal signatures of the remote terminals on this uplink channel. In transponder mode, remote terminal CPU 68 toggles switch control signal 70, which instructs switch 69 to drive transmitter 60 with received data 49.

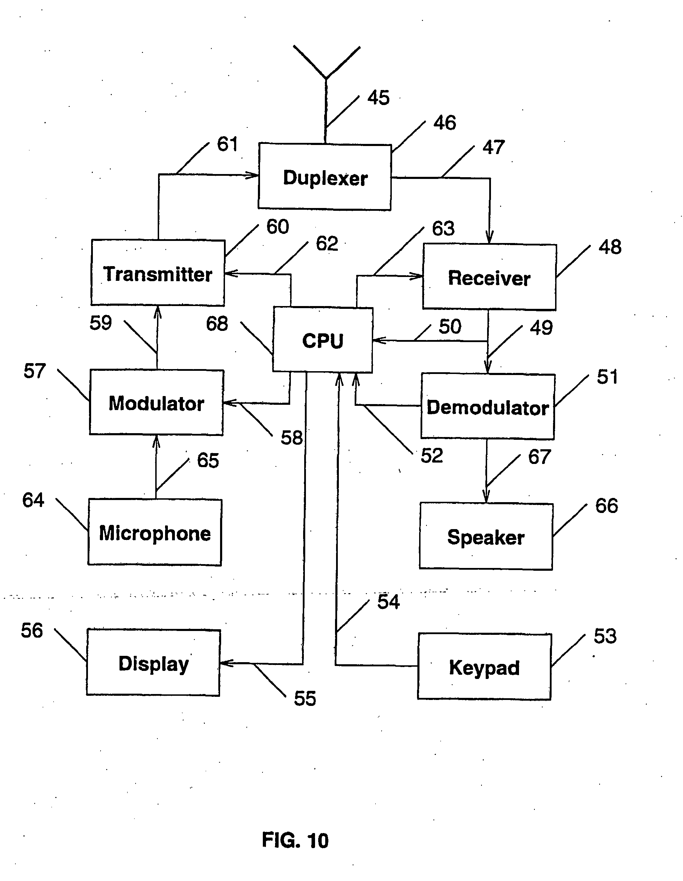

Figure 10 shows an alternate embodiment of the remote terminal transponder function. Switch 69 of figure 9 is no longer used. Instead, the output of receiver 48 is supplied to remote terminal CPU 68 by data connection 50. In normal operation remote terminal CPU 68 ignores data connection 50. In calibration mode, remote terminal CPU 68 uses data connection 50 to compute the remote terminal's transmit spatio-temporal signature, which is transmitted back to base station 1 through modulator 57 and transmitter 60 as control data to be transmitted 58.

In an alternate embodiment, spatio-temporal calibration procedures in the remote terminal are not required. In many conventional wireless protocol standards, remote terminals regularly report received signal strength or receive signal quality back the base station. In this embodiment, the received signal strength reports are sufficient to compute the remote terminal's transmit spatio-temporal signature, as described below.

*Operation of Invention*

**General Principles - Base Station**

In many respects, the spectrally efficient base station shown in figure 1 behaves much like a standard wireless communication system base station. The primary distinction is that the spectrally efficient base station supports more simultaneous conversations than a conventional base station using the same time/frequency resources. The communication channels may be frequency channels, time channels, code channels, or any combination of these. The spatio-temporal multiplexer/demultiplexer increases the system capacity by allowing multiple simultaneous communication links on each of these channels. Moreover, by combining signals from multiple receive antennas, the spatio-temporal demultiplexer 20 produces separated uplink signals 5 that are equalized in simultaneously spatially and temporally. The separate uplink signals 5 will as a consequence have substantially improved signal-to-noise, reduced interference, and improved quality in multipath environments compared to a standard base station.

In the illustrative embodiment, a wireless communication system comprised of multiple remote terminals and base stations incorporating antenna arrays and spatio-temporal signal processing is described. Such systems have application, for example, in providing wireless access to the local PSTN. Information transfers (or calls) are initiated by either a remote terminal or by communication link 2 through base station controller 3. Call initialization takes place on a downlink and uplink control channel as is well known in the art. In the present embodiment, the downlink control channel is transmitted using transmission antennas 18(a,...,m). In an alternate embodiment, the downlink control channel is broadcast from a single, omnidirectional antenna. Base station controller 3 passes the identification of the remote terminal to be involved in the call to spatio-temporal processor 13 which uses the stored spatio-temporal signatures of that remote terminal to determine which communication channel the remote terminal should use. The selected channel may already be occupied by several remote terminals, however spatio-temporal processor 13 uses the spatio-temporal signatures of all of the remote terminals on that channel to determine that they can share the channel without interference.

Spatio-temporal processor 13 uses calculated spatio-temporal multiplexing and demultiplexing weights for the selected channel and the remote terminal in question to configure spatio-temporal multiplexer 23 and spatio-temporal demultiplexer 20. Spatio-temporal processor 13 then informs controller 3 of the selected channel. As in a conventional base station, controller 3 then commands the remote terminal (via the downlink control channel) to switch to the selected channel for continued communications. In the event that the remote terminal has power control capabilities, as is well known in the art, controller 3 also commands the remote terminal to adjust its power to an appropriate level based on parameters such as the power levels of the other remote terminals sharing the same channel and the required signal quality for each link as discussed below. At the termination of communications, the remote terminal returns to its idle state where it monitors the downlink control channel awaiting its next call.

**Temporal and Spatial Processing - Base Station**

Figure 8 shows a block diagram of spatio-temporal processor 13. It is controlled by spatio-temporal processor controller 39, which interfaces to base station controller 3 via link 33. Spatio-temporal processor controller 39 controls the gain and frequency settings of multichannel transmitters 14 and multichannel receivers 15 by control lines 37 and 36.
Spatio-temporal processor 13 maintains an active remote terminal list 40 that catalogs which remote terminals are currently using each communication channel as well as their current transmit power levels. Other parameters of the remote terminals such as modulation formats currently used, receiver noise levels in current frequency channels, and current signal quality requirements are stored as well. Spatio-temporal processor 13 also maintains a spatio-temporal signature list in the remote terminal database 42, which in alternate embodiments includes remote terminals' power control levels, allowed frequency channels for receive and transmit, and list of modulation formats understood.
The spatio-temporal signature list in the remote terminal database 42 contains a transmit spatio-temporal signature, $\mathbf{H}_t$, and a receive spatio-temporal signature, $\mathbf{H}_r$, for every channel of operation for each remote terminal. In another embodiment, a set of basis vectors that span the same column space as the transmit and receive spatio-temporal signatures are stored, for example by storing the largest singular values and the corresponding singular vectors of the signatures. In another embodiment, parameters from which the signature can be formed are stored, for example by storing the transmit and receive channel response matrices. In another embodiment, estimates of the quality (*e.g.*, estimate error covariances) of the spatio-temporal signatures are stored as well. In yet another embodiment, parameters describing the uncertainty due to time variations of the spatio-temporal signatures are stored as well. The transmit spatio-temporal signature includes the effects of the propagation environment between the base station and the remote terminal, as well as any differences in frequency characteristics of the transmitters 14, antenna cables, and transmission antennas 18(a, ...,m).
When the base station controller 1 forwards a call initialization request for a particular remote terminal via link 33, a channel selector 41 searches active remote terminal list 40 to find a communication channel that can accommodate the remote terminal. In the preferred embodiment, there is a receive active remote terminal list and a transmit active remote terminal list which are used by channel selector 41 in forming both a multiplexing spatio-temporal matrix and a demultiplexing spatio-temporal matrix for each channel. For each channel, the demultiplexing and the multiplexing spatio-temporal signature matrices are formed from the stored receive and transmit spatio-temporal signatures of each of the remote terminals currently active on (using) that channel plus an additional part containing the appropriate spatio-temporal signature of the remote terminal requesting a communication channel, see equations (10-23).
Channel selector 41 calculates functions of these signature matrices to assess whether or not communication between the base station and the new remote terminal can be successfully carried out on the selected channel. In the preferred embodiment, channel selector 41 first calculates spatio-temporal multiplexing and demultiplexing weights for that remote terminal and then uses these weights to estimate link performance.
In the illustrative embodiment, spatio-temporal multiplexing weight vector are the columns of the matrix $\mathbf{W}_{tx}$. The $k$th column of $\mathbf{W}_{tx}$ is given in equation (31):

$$\{\mathbf{W}_{tx}\}_k = s_k^t \left\{ \mathcal{H}_t (\mathcal{H}_t^* \mathcal{H}_t)^{-1} \right\}_{mL_t(k-1)+1} \quad k = 1, \ldots, n_t ,  \tag{31}$$

where $(\cdot)^{-1}$ is the inverse of a matrix, $\{\cdot\}_k$ is the k$^{th}$ column of a matrix, $H_t$ is the multiplexing spatio-temporal signature matrix associated with the relevant channel, and $s_k^t$ is the the amplitude of the $k$th signal to be transmitted. If the resulting multiplexing matrix is not stable, a stable approximation of the multiplexing matrix is formed as is well known in the art. The amplitudes to be transmitted, $s_k^t$, are calculated in the preferred embodiment using the remote terminal receiver mean-square noise voltages $(N_k)$ and the minimum desired signal qualities $(SNR_k^{des})$ as given in equation (32):

$$s_k^t = (SNR_k^{des} \times N_k)^{1/2} \,. \tag{32}$$

Now channel selector 41 calculates the average mean-square voltage (power) $\overline{P}_t$ to be transmitted from each element as the sum of squares of the appropriate elements of the weights

$$\overline{P_t} = \text{diag}\left( [\overline{\mathbf{W}}_{tx}^{1*} \cdots \overline{\mathbf{W}}_{tx}^{n_t*}] \begin{bmatrix} \overline{\mathbf{W}}_{tx}^1 \\ \vdots \\ \overline{\mathbf{W}}_{tx}^{n_t} \end{bmatrix} \right), \tag{33}$$

where $\overline{\mathbf{W}}_{tx}^k$ is the weight matrix for the $k^{th}$ user as defined in equation (21) and diag($\cdot$) is a vector obtained by stacking the diagonal elements of a matrix. The peak square voltage (power) $P_t^{peak}$ to be transmitted from each element is computed as the square of sum of the magnitude of the appropriate weights

$$P_t^{peak} = \text{diag}\left( \text{abs}\left( [\overline{\mathbf{W}}_{tx}^{1*} \cdots \overline{\mathbf{W}}_{tx}^{n_t*}] \right) \text{abs}\left( \begin{bmatrix} \overline{\mathbf{W}}_{tx}^1 \\ \vdots \\ \overline{\mathbf{W}}_{tx}^{n_t} \end{bmatrix} \right) \right), \tag{34}$$

where abs($\cdot$) is element-wise absolute value. Channel selector 41 compares these values against the limits for each of the transmitters for each of the elements. If any of the average or peak values exceed the acceptable limits, the remote terminal in question is not assigned to the candidate channel. Otherwise, the ability to successfully receive from the remote terminal is checker.

In an alternate embodiment, the transmitter limits are used as inequality constraints in an optimization algorithm for calculating transmit weights that meet the specifications given and that also result in the minimum amount of transmitted power possible. If transmit weights satisfying the constraints can not be found, the remote terminal in question is not assigned to the candidate channel. Such optimization algorithms are well known.

In an alternative embodiment employing time division duplexing (TDD), the multiplexing weights are chosen to be scaled versions of the demultiplexing weights since the channels and interference are assumed to be reciprocal. The scale parameter is chosen to provide sufficient *SINR* at the remote terminal.

To test the uplink, channel selector 41 calculates spatio-temporal demultiplexing weights $\mathbf{W}_{rx}$ using the demultiplexing spatio-temporal signature matrix $H_r$, associated with the relevant channel. In the illustrative embodiment, spatio-temporal demultiplexing weight vectors are the columns of the matrix $\mathbf{W}_{rx}$ given in equation (35):

$$\mathbf{W}_{rx} = (\mathcal{H}_r P_r \mathcal{H}_r^* + R_{nn})^{-1} \mathcal{H}_r \bar{P}_r \,, \tag{35}$$

where the $k^{th}$ column of $\overline{P}_r$ is given by equation (36)

$$\{\bar{P}_r\}_k = \{P_r\}_{L_r(k-1)+1} \quad k = 1, \ldots, n_r \,, \tag{36}$$

where $P_r$ is a (diagonal) matrix of mean-square amplitudes (powers) of the signals $s_r^{k,L_r}$, transmitted by the remote terminals

$$P_r = \mathrm{E}\left\{ \begin{bmatrix} s_r^{1,L_r}(t) \\ \vdots \\ s_r^{n_r,L_r} \end{bmatrix} [s_r^{1L_r*}(t) \cdots s_r^{n_r,aL_r*}] \right\} \tag{37}$$

and $R_{nn} = \mathrm{E}\{e_r(t)e_r^*(t)\}$ is the base station noise covariance. Then, the expected value of the normalized mean-squared error covariance is calculated in one embodiment as follows:

$$\overline{MSE} \equiv \bar{P}_r^{-1/2}((I - \mathbf{W}_{rx}^*\mathcal{H}_r)P_r(I - \mathbf{W}_{rx}^*\mathcal{H}_r)^* + \mathbf{W}_{rx}^* R_{nn} \mathbf{W}_{rx})\bar{P}_r^{-*/2} \tag{38}$$

where the notation $(\cdot)^{-*/2}$ indicates complex conjugate transpose of the square root of the matrix. The inverse of *MSE* is an estimate of the expected Signal-to-Interference-plus-Noise Ratio (*SINR*) at the output of the spatio-temporal demultiplexer:

$$\overline{SINR} = \overline{MSE}^{-1}. \tag{39}$$

If all of the diagonal elements of $\overline{SINR}$ are above the desired thresholds based on the signal quality required to be received from each remote terminal, the remote terminal is allowed access to the channel. If the candidate remote terminal is below its threshold and has the ability to increase its output power, the same computations are again performed for increasing remote terminal power output until either the maximum output power for that remote terminal is reached and the $\overline{SINR}$ is still insufficient, another remote terminal $\overline{SINR}$ falls below its threshold in which case its power is increased if possible, or all thresholds are exceeded. If acceptable remote terminal transmit powers can be found, the remote terminal is granted access to this particular channel, otherwise it is denied access and another channel is checked.

In an alternate embodiment, the calculation of demultiplexing weights is performed using well known optimization procedures with the objective of minimizing remote terminal transmit powers subject to estimated signals at the base station meeting or exceeding their minimum desired *SINR's.*

Also, in an alternate embodiment, in the case that no channel can be found to accommodate the remote terminal, channel selector 41 calculates whether some rearrangement of the existing remote terminals among the channels would allow the remote terminal to be supported on some channel. In this case, the remote terminal will only be denied communication at this time if no rearrangement of existing users allows the remote terminal to be accommodated.

In an alternate embodiment employing frequency division duplexing (FDD), remote terminals are not restricted to being assigned a fixed channel pair for transmit and receive. A sufficiently flexible system architecture is employed where channel selector 41 may choose to assign a particular remote to transmit and receive channels separated by different frequency duplex offsets in order to minimize overall system interference levels.

Spatio-temporal multiplexing and demultiplexing weights for remote terminals already using a channel must be recalculated because adding a new remote terminal to that channel may change them significantly. In the preferred embodiment, channel selector 41, having already done the necessary calculations, sends the new spatio-temporal multiplexing and demultiplexing weights to the spatio-temporal weight processor 43 for use in setting up the spatio-temporal multiplexer 23 and demultiplexer 20. In an alternate embodiment, spatio-temporal weight processor 43 uses the spatio-temporal signature matrices sent to it by channel selector 41 to calculate different sets of spatio-temporal multiplexing and demultiplexing weights for all of the remote terminals on that channel.

Spatio-temporal weight processor 43 then sends the new spatio-temporal demultiplexing weights to spatio-temporal demultiplexers 20 and the new spatio-temporal multiplexing weights to the spatio-temporal multiplexers 23 for this channel, updates the active remote terminal list 40, and informs spatio-temporal processor controller 39 which in turn informs base station controller 3 of the selected channel. Base station controller 3 then transmits a message to the remote terminal using the downlink control channel that instructs the remote terminal to switch to the desired channel.

It can be shown from equation (31) that the multiplexing weights $\mathbf{W}_{tx}$ have the property:

$$\mathbf{W}_{tx}^*\mathcal{H}_t = \mathrm{diag}(s_1^t, \cdots, s_{n_t}^t), \tag{40}$$

where diag($\cdot$) is a diagonal matrix with diagonal elements formed from a vector. This means that at the $k^{th}$ remote terminal, the signal intended to be sent to that terminal is received with a sufficient (positive real) amplitude $s^t_k$. The fact that $\mathbf{W}^{*}_{tx}\mathcal{H}_t$ has zero off-diagonal elements means that at the $k^{th}$ remote terminal, none of the other signals being transmitted are received by that remote terminal. In this manner, each remote terminal receives only the signals intended for it at the necessary power levels to ensure proper communications. In alternate embodiments, uncertainties in the estimates of $H_t$ are incorporated in setting base station transmit power levels and calculating weights so as to minimize the effect of errors and/or changes in $H_t$.

Similarly, at the base station the particular demultiplexing weights given in (35) have the property that conditioned on the knowledge of the receive spatio-temporal signatures and the transmitted voltages (powers) from the remote terminals, the estimated signals $\hat{S}$ given by:

$$\hat{S} = \mathbf{W}^{*}_{rx}\mathbf{z}_r \, , \tag{41}$$

are the most accurate in the sense of least mean-squared error. In particular, they most closely match the signals transmitted by the remote terminals given the measurements made at the base station by the multiple antenna elements.

Equations (31) and (35) represent only one way to calculate spatio-temporal multiplexing and demultiplexing weights. There are other similar strategies that demonstrate properties similar to those shown in equation (40) and described in the previous paragraph. Other well known techniques for calculating weights $\mathbf{W}_{tx}$ and $\mathbf{W}_{rx}$ account for uncertainty in multiplexing and demultiplexing spatio-temporal signature matrices $H_t$ and $H_r$, and can incorporate more complex power and dynamic range constraints.

**Determining the Spatio-Temporal Signatures**

As shown in figure 8, spatio-temporal processor 13 also contains a spatio-temporal signature processor 44 for finding the spatio-temporal signatures of the remote terminals. In the illustrative embodiment, spatio-temporal signature processor 44 uses the calibration techniques similar to the ones described in our U.S. patent 5,546,090 (issued 13 August 1996) entitled "Method and Apparatus for Calibrating Antenna Arrays".

In the illustrative embodiment, each remote terminal is capable of entering a calibration mode. In the calibration mode, the remote terminal can transmit predetermined signals and also enter transponder mode where the received signal 49 is transmitted back to base station 1. The calibration mode is controlled by remote terminal CPU 68. Referring to figure 9, the transponsder mode is provided by switch 69 controlled by remote terminal CPU 68 through switch control signal 70.

To determine the transmit and receive spatio-temporal signatures of a remote terminal, spatio-temporal signature processor 44 commands the remote terminal to enter calibration mode by transmitting a command to it on the downlink channel. This command is generated by base station controller 3, based on a request from spatio-temporal processor controller 39, and modulated by signal modulators 24. In an alternative embodiment, calibration mode is entered regularly at predetermined instances.

The remote terminal then transmits predetermined *terminal calibration signal* on the channel. In the present embodiment, the terminal calibration signal is a known pseudo random noise sequence confined to the frequency band of of the current channel. In another embodiment, the predetermined terminal calibration signal is any known signal. Time samples of the received data are stored in an $m$ by $N_r$ data matrix $\mathbf{X}$ which according to equation (5) and in the absence of noise and parameter offsets is given by

$$\mathbf{X} = \mathbf{h}_r\mathbf{S}_r \tag{42}$$

where $S_r$ is the $M_r$ by $N_r$ matrix of predetermined terminal calibration signals. The receive channel response matrix is then given by

$$\mathbf{h}_r = \mathbf{X}\mathbf{S}^{\dagger}_r \tag{43}$$

where $\mathbf{S}_r^{\dagger}$ is the well known Moore-Penrose pseudo-inverse of the matrix $S_r$ satisfying $\mathbf{S}_r \mathbf{S}_r^{\dagger} = I$ (the identity matrix) for full-rank matrices $\mathbf{S}_r$ having more columns than rows, $\mathbf{S}_r^{\dagger} \mathbf{S}_r = I$ for full-rank matrices $S_r$ having more rows than columns. The receive spatio-temporal signature $\mathbf{H}_r$ can now be constructed from the channel matrix $\mathbf{h}_r$.

In alternate embodiments, the receive spatio-temporal signature $H_r$ is determined directly by storing time samples of the spatio-temporal receive vector in an $mL_r$ by $N_r$ data matrix $\mathbf{Z}$ which according to equation (8) and in the absence of noise and parameter offsets is given by

$$\mathbf{Z} = \mathbf{H}_r \mathbf{S}_r \qquad (44)$$

where in this case $S_r$ is the $M_r + L_r - 1$ by $N_r$ matrix of predetermined terminal calibration signals. The receive spatio-temporal signature is then given by

$$\mathbf{H}_r = \mathbf{Z} \mathbf{S}_r^{\dagger} . \qquad (45)$$

Receive spatio-temporal signatures may be determined while other terminals are using the same channel.

In alternate embodiments the spatio-temporal demultiplexing weight vector is determined directly from equation (46):

$$\mathbf{w}_{rx}^* \mathbf{Z} = \mathbf{S}_r . \qquad (46)$$

where in this case $S_r$ is the 1 by $N_r$ vector containing the predetermined terminal calibration signal.

The spatio-temporal demultiplexing weight vector is then given by

$$\mathbf{w}_{rx} = \mathbf{Z}^{*\dagger} \mathbf{S}_r^* . \qquad (47)$$

Spatio-temporal demultiplexing weight vectors may be determined while other terminals are using the same channel.

In an alternative embodiment the terminal calibration signal is not completely known but has predetermined modulation format parameters. Several techniques known in the art make use of predetermined modulation format parameters, for example, a constant modulus signal to determine the receive channel matrix. Once the receive channel matrix is determined, the receive spatio-temporal signature is formed as described above. It is also clear to someone in the art how to determine the receive spatio-temporal signature or demultiplexing weight vector using the predetermined modulation format parameters of the terminal calibration signal.

In alternate embodiments related to those described in U.S. patent 5,546,090 (issued 13 August 1996) entitled "Method and Apparatus for Calibrating Antenna Arrays", well known techniques are used to account for noise present in the system and parameter variations such as oscillator frequency offsets.

Once $\mathbf{H}_r$ is known, demultiplexing weights are computed and the remote terminal enters transponder mode. Spatio-temporal signature processor 44 then transmits predetermined *base station calibration signals 11*, on the channel occupied by the remote terminal, by instructing multichannel transmitters 17(a, ...,m) via transmitter control data 37 and spatio-temporal processor controller 39. In the present embodiment, the m signals (for each antenna) among the predetermined base station calibration signals 11 are different known pseudo random noise sequences confined to the frequency band of the current channel. In another embodiment, the predetermined base station calibration signals 11 are any known, distinct, signals.

The remote terminal shown in figure 9 transmits back the signal received at the remote terminal. This transponded signal is received by multichannel receivers 15 in base station 1 shown in figure 1 and supplied to spatio-temporal signature processor 44 shown in figure 8. Time samples of the received data are processed by the demultiplexing weights and the resulting signal is stored in a 1 by $N_t$ data matrix $\mathbf{Z}_t$ which according to equation (14) and in the absence of noise and parameter offsets is given by

$$\mathbf{Z}_t = k \left[ \mathbf{h}_t^T(1) \cdots \mathbf{h}_t^T(L_t) \right] \mathbf{S}_t \qquad (48)$$

where $\mathbf{S}_t$ is the $mL_t$ by $N_t$ matrix of predetermined base station calibration signals and k is a known amount by which the signal is amplified in the remote terminal before transmission back to the base station.

The transmit channel response is then given by

$$\left[ \mathbf{h}_t^T(1) \cdots \mathbf{h}_t^T(L_t) \right] = k^{-1} \mathbf{Z}_t \mathbf{S}_t^\dagger . \qquad (49)$$

The transmit spatio-temporal signature $\mathbf{H}_t$ can now be formed from the transmit channel response.

In an alternative embodiment the base station calibration signal is not completely known but has predetermined modulation format parameters. Several techniques known in the art make use of predetermined modulation format parameters to determine the transmit channel matrix.

In alternate embodiments also described in U.S. patent 5,546,090 (issued 13 August 1996) entitled "Method and Apparatus for Calibrating Antenna Arrays", well known techniques are used to account for noise present in the system and parameter variations such as oscillator frequency offsets.

In an alternative embodiment, the calibration mode only consists of the transponder model described above. The receive channel matrix is then determined through one of several techniques described in the literature, see for example E. Moulines, P. Duhamel, J.-F. Cardoso, and S. Mayrargue, "Subspace methods for the blind identification of multichannel FIR filters," IEEE Transactions on Signal Processing, 43(2):516-525, February 1995.

Spatio-temporal signature processor 44 stores the new spatio-temporal signatures in remote terminal database 42. Upon completion, spatio-temporal signature processor 44 commands the remote terminal to exit calibration mode by transmitting a command to it on the downlink channel.

In one alternate embodiment, computation of remote terminal transmit spatio-temporal signatures can be performed directly by the remote terminals. This embodiment of the remote terminal is shown in figure 10. In calibration mode, spatio-temporal signature processor 44 transmits predetermined calibration signals 11, on the channel to be calibrated by the remote terminals, as before. Remote terminal CPU 68 uses received calibration signals 50 and the known transmitted waveforms to compute the remote terminal's transmit spatio-temporal signature using the same techniques used by spatio-temporal signature processor 44 in the previous embodiment. The computed transmit spatio-temporal signature is transmitted back to base station 1 through modulator 57 and transmitter 60 as control data to be transmitted 58. When received by base station 1, spatio-temporal signature processor 44 stores the new transmit spatio-temporal signature in remote terminal database 42. Since each remote terminal performs the transmit spatio-temporal signature calculation independently, this arrangement allows multiple remote terminals to compute their own transmit spatio-temporal signature simultaneously on the same channel. In this embodiment, remote terminal receive spatio-temporal signatures are computed by spatio-temporal signature processor 44 in the same manner as in the previous embodiment.

Using these techniques, spatio-temporal signature processor 44 can measure remote terminal transmit and receive spatio-temporal signatures for a particular channel any time that channel is idle. The efficiency of these calibration techniques allow spatio-temporal signature processor 44 to update the spatio-temporal signatures of numerous remote terminals for a particular channel while occupying that channel for only a short time.

In an alternative embodiment, the receive spatio-temporal signatures are obtained in a decision-directed feedback mode. The receive data is demodulated and then remodulated to produce an estimate of the original modulated signal. These techniques allow receive spatio-temporal signatures to be estimated even when multiple remote terminals are occupying a single channel.

In yet another embodiment, the system can be designed to continuously update the spatio-temporal signatures of the remote terminals in a "closed loop" manner. This is done to account for the time variation of spatio-temporal signatures due to, for example, motion of the remote terminal or changes in the RF propagation conditions. To do this, both the base station and the remote terminal periodically transmit predetermined training sequences. Each remote terminal currently active on a particular channel is assigned a different predetermined training sequence and is given the training sequences for all other remote terminals currently active on that particular channel. In one embodiment, the different training sequences are orthogonal in the sense that the inner product of any two of the training sequence waveforms is zero. Each time the training sequences are transmitted, each remote terminal calculates how much of each training sequence it has received using well known techniques, and transmits this information to the base station.

In the illustrative embodiment, the base station uses the receiver outputs and knowledge of the transmitted waveforms to calculate the remote terminal receive spatio-temporal signatures. In another embodiment, the base station calculates how much of each remotely transmitted training sequence has come through on each output of the spatio-temporal demultiplexer, expressed as a complex coupling coefficients. Knowledge of these coupling coefficients allows the currently active receive and transmit spatio-temporal signatures to be corrected so as to reduce mutual interference using well know techniques.

Finally, in systems that use time division duplexing (TDD) for full-duplex communications, as is well known in the art, the transmit and receive frequencies are the same. In this case, using the well known principle of reciprocity, the transmit and receive spatio-temporal signatures are directly related. Thus, this embodiment determines only one of the signatures, for example the receive spatio-temporal signature, and the other, in this case the transmit spatio-temporal signature, is calculated from the first (receive) spatio-temporal signature and knowledge of the relative phase and amplitude characteristics of multichannel receivers 15 and multichannel transmitters 14.

**Network Level Spatio-Temporal Processing**

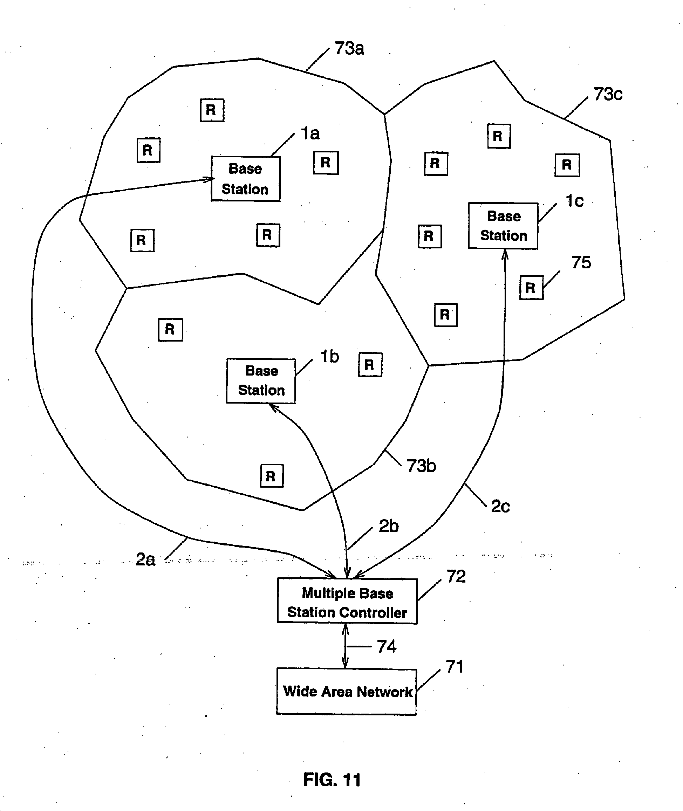

In the embodiment illustrated herein, the spatio-temporal processor for each base station in the cellular-like wireless communication system operates independently to maximize the number of communication channels in the immediate cell. However, significant system capacity improvements can be realized if the spatio-temporal processor from each base station communicates with and coordinates its efforts with the spatio-temporal processors from other nearby cells. A specific embodiment is shown in figure 11.

A multiple base station controller 72 acts as the interface between the wide area network 71 through link 74 and base stations 1 (a,b,c) via base station communication links 2 (a,b,c). Each base station is responsible for providing coverage to a number of remote terminals. In one embodiment, each remote terminal is assigned to only one base station thus defining cell boundaries 73 (a,b,c) within which all remote terminals attached to a particular base station are located. Users equipped with remote terminals 75 are identified by a boxed "R" in the figure.

Each spatio-temporal processor contained in base stations 1 (a,b,c) measures and stores the spatio-temporal signatures of the remote terminals in its cell and also of the remote terminals in adjacent cells. The determination of spatio-temporal signatures of the remote terminals in adjacent cells is coordinated by multiple base station controller 72 through base station communication links 2 (a,b,c). Through base station communication links 2 (a,b,c) and multiple base station controller 72, spatio-temporal processors in base stations 1 (a,b,c) from adjacent cells inform each other of which remote terminals they are communicating with on which channels. Each spatio-temporal processor includes the spatio-temporal signatures of remote terminals that are currently active in adjacent cells to form extended multiplexing and demultiplexing spatio-temporal signature matrices $H_t$ and $H_r$ which are sent to all the adjacent base stations. The channel selectors in each base station, using these extended spatio-temporal signature matrices, jointly assign remote terminals to each channel in each of base stations 1 (a,b,c).

The resulting multiplexing and demultiplexing weights $\mathbf{W}_{tx}$ and $\mathbf{W}_{rx}$ for each base station are then calculated using extended multiplexing and demultiplexing signature matrices $H_t$ and $H_r$. In calculating the weights, the objective is to minimize the signal transmitted to and received from the adjacent cell's active remote terminals, thereby allowing many more remote terminals to simultaneously communicate.

In an alternate embodiment, multiple base station controller 72 assigns remote terminals requesting access to base stations dynamically using a list of active remote terminal/base station/channel links, the associated remote terminal databases, and the particular requirements for the link to be assigned. Additionally, remote terminals can employ multiple (directional) transmit and receive antennas, to facilitate directive links to multiple nearby base stations as instructed by multiple base station controller 72 to further increase system capacity.

*Advantages*

The apparatus and method in accordance with the invention provides a significant advantage over the prior art in that it allows many more remote terminals to simultaneously share the same communication channel by simultaneous spatio-temporal multiplexing/demultiplexing. Moreover, signals received from and transmitted to the remote terminals have substantially improved signal-to-noise, reduced interference, and improved quality in multipath environments compared to a standard base station.

Thus, a wireless communication system can support many times more conversations, or have a much greater data throughput, with the same amount of spectrum. Alternatively, a wireless communication system can support the same number of conversations or data throughput with much less spectrum.

*Alternate Embodiments*

In one alternate embodiment, transmission antennas 18(a,...,m) and reception antennas 19(a,...,m) at base station 1 are replaced by a single array of *m* antennas. Each element in this array is attached to both its respective component of multichannel transmitters 14 and its respective component of multichannel receivers 15 by means of a duplexer.

In another alternate embodiment, signals on the uplink control channel may be processed in real time using the spatio-temporal processing described in WO 98/18272. This would allow multiple remote terminals to request a communication channel at the same time.

In yet another embodiment for applications involving data transfer of short bursts or packets of data, no separate uplink control channel is required and the system may service requests for communication and other control functions during control time intervals that are interspersed with communications intervals.

While the above description contains many specificities, these should not be construed as limitations on the scope of the invention, but rather as an exemplification of one preferred embodiment thereof. Many other variations are possible. Accordingly, the scope of the invention should be determined not by the illustrated embodiments, but by the appended claims.

**Claims**

1. A wireless system at a base station (1) for calculating uplink signals transmitted from a plurality of remote terminals using a common uplink channel, said system comprising:

    receiving means (15, 19) including a plurality of antenna elements (19) and receivers (15) for producing measurements of combinations of said uplink signals from said plurality of remote terminals using said common uplink channel;
    receive spatio-temporal processing means (13) for determining and storing receive spatio-temporal signatures for said plurality of remote terminals using said measurements, and for determining and storing spatio temporal demultiplexing weights for each antenna element (19) to allow the uplink signals to be separated from the combinations of uplink signals measured by the antenna elements (19), the spatio temporal demultiplexing weights for each antenna element (19) comprising a plurality L of weights corresponding to the length of a sliding window; and
    spatio-temporal demultiplexing means (20) comprising a plurality of receive temporal filters (22), and an adder (21), each receive temporal filter (22) being arranged to receive a signal from a corresponding antenna element (19) and a complex conjugate of the spatio temporal demultiplexing weights for the respective antenna element (19), the adder (21) being arranged to add the outputs of the receive temporal filters (22) to produce separated uplink signals; each receive temporal filter (22) comprising a series of sample delays (27) corresponding to the length L of the sliding window, multipliers (26) arranged to multiply time delayed versions of the received signal for an antenna element (19) with respective spatio temporal demultiplexing weights, and an adder (28) arranged to add the results of the multiplications to generate the output of the receive temporal filter (22).

2. The wireless system as defined by claim 1, wherein said receive spatio-temporal processing means (13) is arranged to determine said spatio-temporal demultiplexing weights as the columns of matrix $W_{rx}$ as follows:

$$W_{rx} = (H_r P_r H_r^{\bullet} + R_{nn})^{-1} H_r \overline{P}_r,$$

$$W_{rx} = (H_r P_r H_r^{\bullet} - R_{nn})^{-1} H_r \overline{P}_r,$$

where $(\dot{\,})^*$ denotes the complex conjugate transpose of a matrix, $(\cdot)^{-1}$ denotes the inverse of a matrix, $R_{nn}$ is the noise covariance matrix of said receivers, $\overline{P}_r$ is a matrix of transmit powers of the remote terminals in said plurality of remote terminals, and $H_r$ is a demultiplexing spatio-temporal signature matrix composed of said receive spatio-temporal signatures for said plurality of remote terminals and said common uplink channel.

**3.** The wireless system as defined by claim 1, wherein said common uplink channel is one of a plurality of uplink channels and wherein said receive spatio-temporal processing means comprises:

means for storing an active remote terminal list of remote terminals assigned to at least one channel of said plurality of uplink channels;

means for storing a spatio-temporal signature list comprising a receive spatio-temporal signature for each remote terminal of said plurality of remote terminals and each channel of said plurality of said uplink channels;

receive spatio-temporal signature determining means for determining said receive spatio-temporal signatures in said spatio- temporal signature list;

a receive channel selector using said active remote terminal list and said receive spatio-temporal signature list to determine assignments of each remote terminal in said active remote terminal list to at least one of the channels of said plurality of uplink channels; and

a receive spatio-temporal weight processor for calculating spatio-temporal demultiplexing weights for each of the terminals in said active remote terminal list and each channel of said plurality of uplink channels assigned to at least one of the terminals in said active remote terminal list.

**4.** The wireless system as defined by claim 1 for calculating downlink signals to be transmitted to a plurality of remote terminals using a common downlink channel, the system further comprising:

transmitting means (14, 18) including a plurality of antenna elements (18) and transmitters (14) for transmitting combinations of said downlink signals to said plurality of remote terminals using said common downlink channel;

transmit spatio-temporal processing means (13) for determining and storing transmit spatio-temporal signatures for said plurality of remote terminals, and for determining and storing spatio temporal multiplexing weights for each antenna element (18) to allow the downlink signals to be combined for transmission by the antenna elements (18), the spatio temporal multiplexing weights for each antenna element (18) comprising a plurality L of weights corresponding to the length of a sliding window; and

spatio-temporal multiplexing means (23) comprising a plurality of transmit temporal filters (29), each transmit temporal filter (29) being arranged to output a signal to a corresponding antenna element (18) and receive a combined signal (9) and a complex conjugate of the spatio temporal multiplexing weights for the respective antenna element (18); each transmit temporal filter (29) comprising a series of sample delays (31) corresponding to the length L of the sliding window, multipliers (30) arranged to multiply time delayed versions of the combined signal (9) with respective spatio temporal multiplexing weights, and an adder (32) arranged to add the results of the multiplications to generate the output of the transmit temporal filter (29).

**5.** The wireless system as defined by claim 4, wherein said receiving means (15, 19) and said transmitting means (14, 18) share common antenna elements using duplexers.

**6.** The wireless system as defined by claim 4, wherein said receiving means (15, 19) and said transmitting means (14, 18) share common antenna elements using transmit/receive switches.

**7.** The wireless system as defined by claim 4, wherein said common uplink channel is one of a plurality of uplink channels, said common downlink channel is one of a plurality of downlink channels, and wherein said receive spatio-temporal processing means (13) and said transmit spatio-temporal processing means (13) comprises:

means for storing an active remote terminal list comprising a list of remote terminals assigned to at least one of the channels of said plurality of uplink channels and remote terminals assigned to at least one of the channels of said plurality of downlink channels;

means for storing a spatio-temporal signature list comprising a receive spatio-temporal signature for each remote terminal of said plurality of remote terminals and each channel of said plurality of uplink channels, and a transmit spatio-temporal signature for each remote terminal of said plurality remote terminals and each of channel of said plurality downlink channels;

receive spatio-temporal signature determining means for determining said receive spatio-temporal signatures;

transmit spatio-temporal signature determining means for determining said transmit spatio-temporal signatures; and

a channel selector using said active remote terminal list and said spatio-temporal signature list to determine assignments of each remote terminal of said active remote terminal list to at least one of the channels of said plurality of uplink channels and at least one of the channels of said plurality of downlink channels.

8. The wireless system as defined by claim 4 at each of a plurality of base stations, wherein said common uplink channel is one of a plurality of uplink channels, said common downlink channel is one of a plurality of downlink channels, each transmit spatio-temporal processing means comprising:

means for storing an active remote terminal list comprising a list of remote terminals assigned to at least one of the channels of said plurality of uplink channels and remote terminals assigned to at least one of the channels of said plurality of downlink channels;

means for storing a spatio-temporal signature list comprising a receive spatio-temporal signature for each remote terminal of said plurality of remote terminals and each channel of said plurality of uplink channels, and a transmit spatio-temporal signature for each remote terminal of said plurality of remote terminals and each channel of said plurality of down-link channels;

receive spatio-temporal signature determining means for determining said receive spatio-temporal signature;

transmit spatio-temporal signature determining means for determining said transmit spatio-temporal signatures;

a receive spatio-temporal weight processor for calculating spatio-temporal demultiplexing weights for each of the terminals in said active remote terminal list to which an uplink channel is assigned and each channel of said plurality of uplink channels assigned to at least one of

the terminals in said active remote terminal list, said spatio-temporal demultiplexing weights being utilized by said spatio- temporal demultiplexing means to calculate said uplink signals;

a transmit spatio-temporal weight processor for calculating spatio-temporal multiplexing weights for each of the terminals in said active remote terminal list to which a downlink channel is assigned and each channel of said plurality of downlink channels assigned to at least

one of the terminals in said active remote terminal list, said spatio-temporal multiplexing weights being utilized by said spatio-temporal multiplexing means to produce said multiplexed downlink signals;

joint channel selector means for jointly determining assignments of each remote terminal in each said active remote terminal list to at least one of the channels of said plurality of uplink channels, to at least one of the channels of said plurality of downlink channels and to at least one of the base stations of said plurality of base stations; and

communication means for communicating said assignments between each base station in said plurality of base stations and said joint channel selector means.

9. The wireless system as defined by claim 4, wherein said spatio-temporal multiplexing means (23) is adapted to determine spatio-temporal multiplexing weight vectors for said common downlink channel as the columns of a matrix $W_{tx}$ as follows:

$$[W_{tx}]_k = s_k^t [H_t (H_t^* H_t)^{-1}]_{ml_y(k-1)+1} \qquad k = 1, \ldots, n_{t,}$$

where $(\cdot)^*$ denotes the complex conjugate transpose of a matrix, $(\cdot)^{-1}$ denotes the inverse of a matrix, $[\cdot]_k$ denotes the $k_{th}$ column of a matrix, $s_k^t$ is the amplitude of the $k_{th}$ said downlink signal, and $H_t$ is a multiplexing spatio-temporal signature matrix composed of said transmit spatio-temporal signatures for said plurality of remote terminals and said common downlink channel.

10. A method performed at a base station (1) for calculating uplink signals transmitted from a plurality of remote terminals using a common uplink channel, said method comprising:

receiving at a plurality of antenna elements (19) and receivers (15) measurements of combinations of said uplink signals from said plurality of remote terminals using said common uplink channel;

determining and storing receive spatio-temporal signatures for said plurality of remote terminals using said measurements and determining and storing spatio temporal demultiplexing weights for each antenna element (19) to allow the uplink signals to be separated from the combinations of uplink signals measured by the antenna elements (19), the spatio temporal demultiplexing weights for each antenna element (19) comprising a plurality L of weights corresponding to the length of a sliding window; and

spatio-temporal demultiplexing by receiving a signal from a corresponding antenna element (19) and a complex conjugate of the spatio temporal demultiplexing weights for the respective antenna element (19) at receive temporal filters (22), in each receive temporal filter (22):

using a series of sample delays (27) corresponding to the length L of the sliding window to delay each signal from a corresponding antenna element (19),

multiplying time delayed versions of the received signal for an antenna element (19) with respective spatio temporal demultiplexing weights, and

adding the results of the multiplications to generate the output of the receive temporal filter (22); and

adding the outputs of the receive temporal filters (22) to produce separated uplink signals;

11. The method as defined by claim 10, wherein said spatio-temporal demultiplexing weights are determined as the columns of matrix $W_{rx}$ as follows:

$$W_{rx} = (H_r P_r H_r^* + R_{nn})^{-1} H_r \overline{P}_r,$$

where $(\cdot)^*$ denotes the complex conjugate transpose of a matrix, $(\cdot)^{-1}$ denotes the inverse of a matrix, $R_{nn}$ is the noise covariance matrix of said receivers, $\overline{P}_r$ is a matrix of transmit powers of the remote terminals in said plurality of remote terminals, and $H_r$ is a demultiplexing spatio-temporal signature matrix composed of said receive spatio-temporal signatures for said plurality of remote terminals and said common uplink channel.

12. The method as defined by claim 10, wherein said common uplink channel is one of a plurality of uplink channels and the determination and storing of the receive spatio-temporal signatures comprises:

storing an active remote terminal list of remote terminals assigned to at least one channel of said plurality of uplink channels;
storing a spatio-temporal signature list comprising a receive spatio-temporal signature for each remote terminal of said plurality of remote terminals and each channel of said plurality of said uplink channels;
determining said receive spatio-temporal signatures in said spatio- temporal signature list;
using said active remote terminal list and said receive spatio-temporal signature list to determine assignments of each remote terminal in said active remote terminal list to at least one of the channels of said plurality of uplink channels; and
calculating spatio-temporal demultiplexing weights for each of the terminals in said active remote terminal list and each channel of said plurality of uplink channels assigned to at least one of the terminals in said active remote terminal list.

13. The method as defined by claim 10 for calculating downlink signals to be transmitted to a plurality of remote terminals using a common downlink channel and a plurality of antenna elements (18) and transmitters (14) for transmitting combinations of said downlink signals to said plurality of remote terminals using said common downlink channel;, the method further comprising:

determining and storing transmit spatio-temporal signatures for said plurality of remote terminals, and determining and storing spatio temporal multiplexing weights for each antenna element (18) to allow the downlink signals to be combined for transmission by the antenna elements (18), the spatio temporal multiplexing weights for each antenna element (18) comprising a plurality L of weights corresponding to the length of a sliding window; and
spatio-temporal multiplexing by, at each of a plurality of transmit temporal filters (29), outputting a signal to a corresponding antenna element (18) and receiving a combined signal (9) and a complex conjugate of the spatio temporal multiplexing weights for the respective antenna element (18); and in each temporal filter (29) using a series of sample delays (31) corresponding to the length L of the sliding window to delay each signal from a corresponding antenna element (19), multiplying time delayed versions of the combined signal (9) with respective spatio temporal multiplexing weights, and adding the results of the multiplications to generate the output of the transmit temporal filter (29).

14. The method as defined by claim 13, wherein said common uplink channel is one of a plurality of uplink channels, said common downlink channel is one of a plurality of downlink channels, and wherein the determination and storing of the receive spatio-temporal signatures and said transmit spatio-temporal signatures comprises:

storing an active remote terminal list comprising a list of remote terminals assigned to at least one of the channels of said plurality of uplink channels and remote terminals assigned to at least one of the channels of said plurality of downlink channels;

storing a spatio-temporal signature list comprising a receive spatio-temporal signature for each remote terminal of said plurality of remote terminals and each channel of said plurality of uplink channels, and a transmit spatio-temporal signature for each remote terminal of said plurality remote terminals and each of channel of said plurality downlink channels;

determining said receive spatio-temporal signatures;

determining said transmit spatio-temporal signatures; and

using said active remote terminal list and said spatio-temporal signature list to determine assignments of each remote terminal of said active remote terminal list to at least one of the channels of said plurality of uplink channels and at least one of the channels of said plurality of downlink channels.

15. The method as defined by claim 13 performed at each of a plurality of base stations, wherein said common uplink channel is one of a plurality of uplink channels, said common downlink channel is one of a plurality of downlink channels, the method further comprising:

storing an active remote terminal list comprising a list of remote terminals assigned to at least one of the channels of said plurality of uplink channels and remote terminals assigned to at least one of the channels of said plurality of downlink channels;

storing a spatio-temporal signature list comprising a receive spatio-temporal signature for each remote terminal of said plurality of remote terminals and each channel of said plurality of uplink channels, and a transmit spatio-temporal signature for each remote terminal of said plurality of remote terminals and each channel of said plurality of down-link channels;

determining said receive spatio-temporal signature;

determining said transmit spatio-temporal signatures;

calculating spatio-temporal demultiplexing weights for each of the terminals in said active remote terminal list to which an uplink channel is assigned and each channel of said plurality of uplink channels assigned to at least one of

the terminals in said active remote terminal list, said spatio-temporal demultiplexing weights being utilized by said spatio- temporal demultiplexing means to calculate said uplink signals;

a transmit spatio-temporal wight processor for calculating spatio-temporal multiplexing weights for each of the terminals in said active remote terminal list to which a downlink channel is assigned and each channel of said plurality of downlink channels assigned to at least

one of the terminals in said active remote terminal list, said spatio-temporal multiplexing weights being utilized by said spatio-temporal multiplexing means to produce said multiplexed downlink signals;

jointly determining assignments of each remote terminal in each said active remote terminal list to at least one of the channels of said plurality of uplink channels, to at least one of the channels of said plurality of downlink channels and to at least one of the base stations of said plurality of base stations; and

communicating said assignments between each base station in said plurality of base stations and said joint channel selector means.

16. The method as defined by claim 13, wherein said spatio-temporal multiplexing weight vectors for said common downlink channel are determined as the columns of a matrix $W_{tx}$ as follows:

$$[W_{tx}]_k = s'_k [H_t (H_t^* H_t)^{-1}]_{n_{I_1}(k-1)+1} \qquad k = 1, \ldots, n_{t_1}$$

where $(\cdot)^*$ denote the complex conjugate transpose of a matrix, $(\cdot)^{-1}$ denotes the inverse of a matrix, $[\,\cdot\,]_k$ denotes the $k_{th}$ column of a matrix, $s'_k$ is the amplitude of the $k_{th}$ said downlink signal, and $H_t$ is a multiplexing spatio-temporal signature matrix composed of said transmit spatio-temporal signatures for said plurality of remote terminals and said common downlink channel.

17. A wireless system at a base station (1) for calculating downlink signals to be transmitted to a plurality of remote terminals using a common downlink channel, said system comprising:

27

transmitting means (14, 18) including a plurality of antenna elements (18) and transmitters (14) for transmitting combinations of said downlink signals to said plurality of remote terminals using said common downlink channel; transmit spatio-temporal processing means (13) for determining and storing transmit spatio-temporal signatures for said plurality of remote terminals, and for determining and storing spatio temporal multiplexing weights for each antenna element (18) to allow the downlink signals to be combined for transmission by the antenna elements (18), the spatio temporal multiplexing weights for each antenna element (18) comprising a plurality L of weights corresponding to the length of a sliding window; and

spatio-temporal multiplexing means (23) comprising a plurality of temporal filters (29), each temporal filter (29) being arranged to output a signal to a corresponding antenna element (18) and receive a combined signal (9) and a complex conjugate of the spatio temporal multiplexing weights for the respective antenna element (18); each temporal filter (29) comprising a series of sample delays (31) corresponding to the length L of the sliding window, multipliers (30) arranged to multiply time delayed versions of the combined signal (9) with respective spatio temporal multiplexing weights, and an adder (32) arranged to add the results of the multiplications to generate the output of the temporal filter (29).

18. The wireless system as defined by claim 17, wherein said spatio-temporal multiplexing means (13) is arranged to determine the spatio-temporal multiplexing weights for said common downlink channel as the columns of a matrix $W_{tx}$ as follows:

$$[W_{tx}]_k = s_k^t [H_t(H_t^* H_t)^{-1}]_{mL_t(k-1)+1} \qquad k = 1, \ldots, n_t,$$

where $(\cdot)^*$ denotes the complex conjugate transpose of a matrix, $(\cdot)^{-1}$ denotes the inverse of a matrix, $[\,.\,]_k$ denotes the $k_{th}$ column of a matrix, $s_k^t$ is the amplitude of the $k_{th}$ said downlink signal, and $H_t$ is a multiplexing spatio-temporal signature matrix composed of said transmit spatio-temporal signatures for said plurality of remote terminals and said common downlink channel.

19. A method performed at a base station (1) for calculating downlink signals to be transmitted to a plurality of remote terminals using a plurality of antenna elements (18) and transmitters (14) for transmitting combinations of said downlink signals to said plurality of remote terminals using a common downlink channel; the method comprising:

determining and storing transmit spatio-temporal signatures for said plurality of remote terminals, and determining and storing spatio temporal multiplexing weights for each antenna element (18) to allow the downlink signals to be combined for transmission by the antenna elements (18), the spatio temporal multiplexing weights for each antenna element (18) comprising a plurality L of weights corresponding to the length of a sliding window; and

spatio-temporal multiplexing by, at each of a plurality of transmit temporal filters (29), outputting a signal to a corresponding antenna element (18) and receiving a combined signal (9) and a complex conjugate of the spatio temporal multiplexing weights for the respective antenna element (18); and in each temporal filter (29) using a series of sample delays (31) corresponding to the length L of the sliding window to delay each signal from a corresponding antenna element (19), multiplying time delayed versions of the combined signal (9) with respective spatio temporal multiplexing weights, and adding the results of the multiplications to generate the output of the transmit temporal filter (29).

20. The method as defined by claim 19, wherein said spado-temporal multiplexing weights for said common downlink channel are determined as the columns of a matrix $W_{tx}$ as follows:

$$[W_{tx}]_k = s_k^t [H_t(H_t^* H_t)^{-1}]_{mL_t(k-1)+1} \qquad k = 1, \ldots, n_t,$$

where $(\cdot)^*$ denote the complex conjugate transpose of a matrix, $(\cdot)^{-1}$ denotes the inverse of a matrix, $[\,\cdot\,]_k$ denotes the $k_{th}$ column of a matrix, $s_k^t$ is the amplitude of the $k_{th}$ said downlink signal, and $H_t$ is a multiplexing spatio-temporal signature matrix composed of said transmit spatio-temporal signatures for said plurality of remote terminals and said common dowlink channel.

**Patentansprüche**

1. Schnurloses System an einer Basisstation (1) zum Berechnen von Uplinksignalen, die von einer Mehrzahl dezentraler Endgeräte unter Verwenden eines gemeinsamen Uplinkkanals gesendet werden, wobei das System Folgendes aufweist:

   Empfangsmittel (15, 19), die eine Mehrzahl von Antennenelementen (19) und Empfänger (15) aufweisen, um Messungen von Kombinationen der Uplinksignale von der Mehrzahl dezentraler Endgeräte, die den gemeinsamen Uplinkkanal verwenden, zu erzeugen,
   Empfangs-Raum-Zeitverarbeitungsmittel (13) zum Bestimmen und Speichern von Empfangs-Raum-Zeitsignaturen für die Mehrzahl dezentraler Endgeräte, die die Messungen verwenden, und zum Bestimmen und Speichern von Raum-Zeit-Demultiplexgewichten für jedes Antennenelement (19), um es zu erlauben, die Uplinksignale von den Kombinationen von Uplinksignalen zu trennen, die von den Antennenelementen (19) gemessen werden, wobei die Raum-Zeit-Demultiplexgewichte für jedes Antennenelement (19) eine Mehrzahl L von Gewichten aufweist, die der Länge eines Gleitfensters entsprechen, und
   Raum-Zeit-Demultiplexmittel (20), die eine Mehrzahl von Empfangs-Zeitfiltern (22) und einen Addierer (21) aufweisen, wobei jedes Empfangs-Zeitfilter (22) eingerichtet ist, um ein Signal von einem entsprechenden Antennenelement (19) und eine komplexe Konjugierte der Raum-Zeit-Demultiplexgewichte für das jeweilige Antennenelement (19) zu empfangen, wobei der Addierer (21) eingerichtet ist, um die Ausgänge der Empfangs-Zeitfilter (22) zu addieren, um getrennte Uplinksignale zu erzeugen, wobei jedes Empfangs-Zeitfilter (22) eine Reihe von Abtastverzögerungen (27) aufweist, die der Länge L des Gleitfensters entsprechen, Multiplikatoren (26), die eingerichtet sind, um zeitverzögerte Versionen des empfangenen Signals für ein Antennenelement (19) mit jeweiligen Raum-Zeit-Demultiplexgewichten zu multiplizieren, und einen Addierer (28), der eingerichtet ist, um die Resultate der Multiplikationen zu addieren, um den Ausgang des Empfangs-Zeitfilters (22) zu erzeugen.

2. Schnurloses System nach Anspruch 1, wobei das Empfangs-Raum-Zeitverarbeitungsmittel (13) eingerichtet ist, um die Raum-Zeit-Demultiplexgewichte als die Spalten der Matrix $W_{rx}$ wie folgt zu bestimmen:

$$W_{rx} = (H_r P_r H_r^x - R_{nn})^{-1} H_r \overline{P_r}$$

   wobei $(\cdot)^*$ die komplexe konjugierte Transponierte einer Matrix bezeichnet, $(\cdot)^{-1}$ die Inverse einer Matrix bezeichnet, $R_{nn}$ die Rauschkovarianzmatrix der Empfänger ist, $\overline{P_r}$ eine Matrix von Sendeleistungen der dezentralen Endgeräte in der Mehrzahl dezentraler Endgeräte ist, und $H_r$ eine Demultiplex-Raum-Zeitsignaturmatrix bestehend aus den Empfangs-Raum-Zeitsignaturen für die Mehrzahl dezentraler Endgeräte und den gemeinsamen Uplinkkanal ist.

3. Schnurloses System nach Anspruch 1, wobei der gemeinsame Uplinkkanal einer einer Mehrzahl von Uplinkkanälen ist und wobei das Empfangs-Raum-Zeitverarbeitungsmittel Folgendes aufweist:

   Mittel zum Speichern einer Liste aktiver dezentraler Endgeräte, die wenigstens einem Kanal der Mehrzahl von Uplinkkanälen zugewiesen sind,
   Mittel zum Speichern einer Raum-Zeitsignaturliste, die eine Empfangs-Raum-Zeitsignatur für jedes dezentrale Endgerät der Mehrzahl dezentraler Endgeräte und jeden Kanal der Mehrzahl der Uplinkkanäle aufweist,
   Empfangs-Raum-Zeitsignatur, die Mittel zum Bestimmen der Empfangs-Raum-Zeitsignaturen in der Liste von Raum-Zeitsignaturen bestimmen,
   einen Empfangskanalwähler, der die Liste aktiver dezentraler Endgeräte und die Liste von Empfangs-Raum-Zeitsignaturen verwendet, um Zuweisungen jedes dezentralen Endgeräts in der Liste aktiver dezentraler Endgeräte zu wenigstens einem der Kanäle der Mehrzahl von Uplinkkanälen zu bestimmen, und
   einen Empfangs-Raum-Zeitgewichtsprozessor zum Berechnen von Raum-Zeit-Demultiplexgewichten für jedes der Endgeräte in der Liste aktiver dezentraler Endgeräte und jeden Kanal der Mehrzahl von Uplinkkanälen, die wenigstens einem der Endgeräte in der Liste aktiver dezentraler Endgeräte zugewiesen sind.

4. Schnurloses System nach Anspruch 1 zum Berechnen von Downlinksignalen, die zu einer Mehrzahl dezentraler Endgeräte zu senden sind, die einen gemeinsamen Downlinkkanal verwenden, wobei das System ferner Folgendes aufweist:

Sendemittel (14, 18), die eine Mehrzahl von Antennenelementen (18) und Sendern (14) zum Senden von Kombinationen der Downlinksignale zu der Mehrzahl dezentraler Endgeräte die den gemeinsamen Downlinkkanal verwenden, aufweist, Sende-Raum-Zeitverarbeitungsmittel (13) zum Bestimmen und Speichern von Sende-Raum-Zeitsignaturen für die Mehrzahl dezentraler Endgeräte und zum Bestimmen und Speichern von Raum-Zeit-Multiplexgewichten für jedes Antennenelement (18), um zu erlauben, die Downlinksignale zum Senden durch die Antennenelemente (18) zu kombinieren, wobei die Raum-Zeit-Multiplexgewichte für jedes Antennenelement (18) eine Mehrzahl L von Gewichten aufweist, die der Länge eines Gleitfensters entsprechen, und Raum-Zeit-Multiplexmittel (23), die eine Mehrzahl von Sende-Zeitfiltern (29) aufweisen, wobei jedes Sende-Zeitfilter (29) eingerichtet ist, um ein Signal zu einem entsprechenden Antennenelement (18) auszugeben und ein kombiniertes Signal (9) und eine komplexe Konjugierte der Raum-Zeit-Multiplexgewichte für das jeweilige Antennenelement (18) zu empfangen, wobei jedes Sende-Zeitfilter (29) eine Reihe von Abtastverzögerungen (31) aufweist, die der Länge L des Gleitfensters entsprechen, Multiplikatoren (30), die eingerichtet sind, um die zeitverzögerten Versionen des kombinierten Signals (9) mit jeweiligen Raum-Zeit-Multiplexgewichten zu multiplizieren, und einen Addierer (32), der eingerichtet ist, um die Resultate der Multiplikationen zu addieren, um den Ausgang des Sende-Zeitfilters (29) zu erzeugen.

5. Schnurloses System nach Anspruch 4, wobei die Empfangsmittel (15, 19) und die Sendemittel (14, 18) Antennenelemente gemeinsam haben, die Duplexer verwenden.

6. Schnurloses System nach Anspruch 4, wobei die Empfangsmittel (15, 19) und die Sendemittel (14, 18) Antennenelement gemeinsam haben, die Sende-/Empfangsschalter verwenden.

7. Schnurloses System nach Anspruch 4, wobei der gemeinsame Uplinkkanal einer einer Mehrzahl von Uplinkkanälen ist, wobei der gemeinsame Downlinkkanal einer einer Mehrzahl von Downlinkkanälen ist, und wobei das Empfangs-Raum-Zeitverarbeitungsmittel (13) und das Sende-Raum-Zeitverarbeitungsmittel (13) Folgendes aufweisen:

Mittel zum Speichern einer Liste aktiver dezentraler Endgeräte, die eine Liste dezentraler Endgeräte aufweist, die wenigstens einem der Kanäle der Mehrzahl von Uplinkkanälen zugewiesen sind, und dezentraler Endgeräte, die wenigstens einem der Kanäle der Mehrzahl von Downlinkkanälen zugewiesen sind,
Mittel zum Speichern einer Liste von Raum-Zeitsignaturen, die eine Empfangs-Raum-Zeitsignatur für jedes dezentrale Endgerät der Mehrzahl dezentraler Endgeräte und jeden Kanal der Mehrzahl von Uplinkkanälen aufweist, und eine Sende-Raum-Zeitsignatur für jedes dezentrale Endgerät der Mehrzahl dezentraler Endgeräte und jeden Kanal der Mehrzahl von Downlinkkanälen,
Mittel zum Bestimmen der Empfangs-Raum-Zeitsignatur zum Bestimmen der Empfangs-Raum-Zeitsignaturen,
Mittel zum Bestimmen der Sende-Raum-Zeitsignatur zum Bestimmen der Sende-Raum-Zeitsignaturen, und
einen Kanalwähler, der die Liste aktiver dezentraler Endgeräte und die Liste von Raum-Zeitsignaturen verwendet, um Zuweisungen jedes dezentralen Endgeräts der Liste aktiver dezentraler Endgeräte zu wenigstens einem der Kanäle der Mehrzahl von Uplinkkanälen und wenigstens einem der Kanäle der Mehrzahl von Downlinkkanälen zu bestimmen.

8. Schnurloses System nach Anspruch 4, an jeder einer Mehrzahl von Basisstationen, wobei der gemeinsame Uplinkkanal einer einer Mehrzahl von Uplinkkanälen ist, wobei der gemeinsame Downlinkkanal einer einer Mehrzahl von Downlinkkanälen ist, wobei jedes Sende-Raum-Zeitverarbeitungsmittel Folgendes aufweist:

Mittel zum Speichern einer Liste aktiver dezentraler Endgeräte, die eine Liste dezentraler Endgeräte aufweisen, die wenigstens einem der Kanäle der Mehrzahl von Uplinkkanälen zugewiesen sind, und dezentraler Endgeräte, die wenigstens einem der Kanäle der Mehrzahl von Downlinkkanälen zugewiesen sind,
Mittel zum Speichern einer Liste von Raum-Zeitsignaturen, die eine Empfangs-Raum-Zeitsignatur für jedes dezentrale Endgerät der Mehrzahl dezentraler Endgeräte und jeden Kanal der Mehrzahl von Uplinkkanälen aufweist, und eine Sende-Raum-Zeitsignatur für jedes dezentrale Endgerät der Mehrzahl dezentraler Endgeräte und jeden Kanal der Mehrzahl von Downlinkkanälen,
Mittel zum Bestimmen der Empfangs-Raum-Zeitsignatur zum Bestimmen der Empfangs-Raum-Zeitsignatur,
Mittel zum Bestimmen der Sende-Raum-Zeitsignatur zum Bestimmen der Sende-Raum-Zeitsignaturen,
einen Empfangs-Raum-Zeitgewichtsprozessor zum Berechnen von Raum-Zeit-Demultiplexgewichten für jedes der Endgeräte in der Liste aktiver dezentraler Endgeräte, welchem ein Uplinkkanal zugewiesen ist, und jeden Kanal der Mehrzahl von Uplinkkanälen, die wenigstens einem der Endgeräte in der Liste aktiver dezentraler Endgeräte zugewiesen sind, wobei die Raum-Zeit-Demultiplexgewichte von den Raum-Zeit-Demultiplexmitteln verwendet werden, um die Uplinksignale zu berechnen,

einen Sende-Raum-Zeitgewichtsprozessor zum Berechnen von Raum-Zeit-Multiplexgewichten für jedes der Endgeräte der Liste aktiver dezentraler Endgeräte, welchen ein Downlinkkanal zugewiesen ist, und jeden Kanal der Mehrzahl von Downlinkkanälen, die wenigstens einem der Endgeräte der Liste aktiver dezentraler Endgeräte zugewiesen sind, wobei die Raum-Zeit-Multiplexgewichte von den Raum-Zeit-Multiplexmitteln verwendet werden, um die gemultiplexen Downlinksignale zu erzeugen,

gemeinsame Kanalauswählermittel zum gemeinsamen Bestimmen von Zuweisungen jedes dezentralen Endgeräts in jeder Liste aktiver dezentraler Endgeräte zu wenigstens einem der Kanäle der Mehrzahl von Uplinkkanälen, zu wenigstens einem der Kanäle der Mehrzahl von Downlinkkanälen und zu wenigstens einer der Basisstationen der Mehrzahl von Basisstationen, und

Kommunikationsmittel zur Kommunikation der Zuweisungen zwischen jeder Basisstation in der Mehrzahl von Basisstationen und den gemeinsamen Kanalauswählermitteln.

9. Schnurloses System nach Anspruch 4, wobei die Raum-Zeit-Multiplexmittel (23) angepasst sind, um Raum-Zeit-Multiplexgewichtsvektoren für den gemeinsamen Downlinkkanal als die Spalten einer Matrix $W_{tx}$ wie folgt zu bestimmen:

$$\left[ W_{tx} \right]_k = s_k^t \left[ H_t (H_t^* H_t)^{-1} \right]_{m \ln(k-1)+1} \qquad k = 1,....,n_t \, ,$$

wobei $(\cdot)^*$ die komplexe konjugierte Transponierte einer Matrix bezeichnet, $(\cdot)^{-1}$ die Inverse einer Matrix bezeichnet, $[\cdot]_k$ die k. Spalte einer Matrix bezeichnet, $s_k^t$ die Amplitude des k. Downlinksignals ist und $H_t$ eine Multiplex-Raum-Zeitsignaturmatrix ist, die aus den Sende-Raum-Zeitsignaturen für die Mehrzahl dezentraler Endgeräte und den gemeinsamen Downlinkkanal besteht.

10. Verfahren, das an einer Basisstation (1) zum Berechnen von Uplinksignalen ausgeführt wird, die von einer Mehrzahl dezentraler Endgeräte gesendet werden, die einen gemeinsamen Uplinkkanal verwenden, wobei das Verfahren Folgendes aufweist:

an einer Mehrzahl von Antennenelementen (19) und Empfängern (15) das Empfangen von Messungen von Kombinationen der Uplinksignale von der Mehrzahl dezentraler Endgeräte, die den gemeinsamen Uplinkkanal verwenden,

Bestimmen und Speichern von Empfangs-Raum-Zeitsignaturen für die Mehrzahl dezentraler Endgeräte, die die Messungen verwenden, und Bestimmen und Speichern von Raum-Zeit-Demultiplexgewichten für jedes Antennenelement (19), um zu erlauben, dass Uplinksignale von den Kombinationen von Uplinksignalen getrennt werden, die von den Antennenelementen (19) gemessen werden, wobei die Raum-Zeit-Demultiplexgewichte für jedes Antennenelement (19) eine Mehrzahl L von Gewichten aufweisen, die der Länge eines Gleitfensters entsprechen, und

Raum-Zeit-Demultiplexen durch Empfangen eines Signals von einem entsprechenden Antennenelement (19) und einer komplexen Konjugierten der Raum-Zeit-Demultiplexgewichte für das jeweilige Antennenelement (19) an Empfangs-Zeitfiltern (22), in jedem Empfangs-Zeitfilter (22):

Verwenden einer Reihe von Abtastverzögerungen (27), die der Länge L des Gleitfensters entsprechen, um jedes Signal von einem entsprechenden Antennenelement (19) zu verzögern,

Multiplizieren zeitverzögerter Versionen des empfangenen Signals für ein Antennenelement (19) mit jeweiligen Raum-Zeit-Demultiplexgewichten, und Addieren der Resultate der Multiplikationen, um den Ausgang des Empfangs-Zeitfilters (22) zu erzeugen, und

Addieren der Ausgänge der Empfangs-Zeitfilter (22), um getrennte Uplinksignale zu erzeugen.

11. Verfahren nach Anspruch 10, wobei die Raum-Zeit-Demultiplexgewichte als die Spalten der Matrix $W_{rx}$ wie folgt bestimmt werden:

$$W_{rx} = (H_r P_r H_r^x - R_{nn})^{-1} H_r \overline{P_r} \, ,$$

wobei $(\cdot)^*$ die komplexe konjugierte Transponierte einer Matrix bezeichnet, $(\cdot)^{-1}$ die Inverse der Matrix bezeichnet, $R_{nn}$ die Rauschkovarianzmatrix der Empfänger ist, $\overline{P}_r$ eine Matrix von Sendeleistungen der dezentralen Endgeräte in der Mehrzahl dezentraler Endgeräte ist, und $H_r$ eine Demultiplex-Raum-Zeitsignaturmatrix bestehend aus den Empfangs-Raum-Zeitsignaturen für die Mehrzahl dezentraler Endgeräte und den gemeinsamen Uplinkkanal ist.

12. Verfahren nach Anspruch 10, wobei der gemeinsame Uplinkkanal einer einer Mehrzahl von Uplinkkanälen ist und das Bestimmen und Speichern der Empfangs-Raum-Zeitsignaturen Folgendes aufweist:

Speichern einer Liste aktiver dezentraler Endgeräte der dezentralen Endgeräte, die wenigstens einem Kanal der Mehrzahl von Uplinkkanälen zugewiesen sind,
Speichern einer Liste von Raum-Zeitsignaturen, die eine Empfangs-Raum-Zeitsignatur für jedes dezentrale Endgerät der Mehrzahl dezentraler Endgeräte und jeden Kanal der Mehrzahl von Uplinkkanälen aufweist,
Bestimmen der Empfangs-Raum-Zeitsignaturen in der Liste der Raum-Zeitsignaturen,
Verwenden der Liste der aktiven dezentralen Endgeräte und der Liste der Empfangs-Raum-Zeitsignaturen, um Zuweisungen jedes dezentralen Endgeräts in der Liste aktiver dezentraler Endgeräte zu wenigstens einem der Kanäle der Mehrzahl von Uplinkkanälen zu bestimmen, und
Berechnen von Raum-Zeit-Demultiplexgewichten für jedes der Endgeräte in der Liste aktiver dezentraler Endgeräte und jeden Kanal der Mehrzahl von Uplinkkanälen, die wenigstens einem der Endgeräte in der Liste aktiver dezentraler Endgeräte zugewiesen sind.

13. Verfahren nach Anspruch 10 zum Berechnen von Downlinksignalen, die zu einer Mehrzahl dezentraler Endgeräte zu senden sind, die einen gemeinsamem Downlinkkanal verwenden, und eine Mehrzahl von Antennenelementen (18) und Sendern (14) zum Senden von Kombinationen der Downlinksignale zu der Mehrzahl dezentraler Endgeräte, die den gemeinsamen Downlinkkanal verwenden, wobei das Verfahren ferner Folgendes aufweist:

Bestimmen und Speichern von Sende-Raum-Zeitsignaturen für die Mehrzahl dezentraler Endgeräte und Bestimmen und Speichern von Raum-Zeit-Multiplexgewichten für jedes Antennenelement (18), um es zu erlauben, dass die Downlinksignale zum Senden durch die Antennenelemente (18) kombiniert werden, wobei die Raum-Zeit-Multiplexgewichte für jedes Antennenelement (18) eine Mehrzahl L von Gewichten aufweisen, die der Länge eines Gleitfensters entsprechen, und
Raum-Zeit-Multiplexen an jedem der Mehrzahl von Sende-Zeitfiltern (29) durch Ausgeben eines Signals zu einem entsprechenden Antennenelement (18) und Empfangen eines kombinierten Signals (9) und einer komplexen Konjugierten der Raum-Zeit-Multiplexgewichte für das jeweilige Antennenelement (18), und in jedem Zeitfilter (29) Verwenden einer Reihe von Abtastverzögerungen (31), die der Länge L des Gleitfensters entsprechen, um jedes Signal von einem entsprechenden Antennenelement (19) zu verzögern, Multiplizieren zeitverzögerter Versionen des kombinierten Signals (9) mit jeweiligen Raum-Zeit-Multiplexgewichten und Addieren der Resultate der Multiplikationen, um den Ausgang des Sende-Zeitfilters (29) zu erzeugen.

14. Verfahren nach Anspruch 13, wobei der gemeinsame Uplinkkanal einer einer Mehrzahl von Uplinkkanälen ist, wobei der gemeinsame Downlinkkanal einer einer Mehrzahl von Downlinkkanälen ist, und wobei das Bestimmen und das Speichern der Empfangs-Raum-Zeitsignaturen und Sende-Raum-Zeitsignaturen Folgendes aufweist:

Speichern einer Liste aktiver dezentraler Endgeräte, die eine Liste dezentraler Endgeräte aufweist, die wenigstens einem der Kanäle der Mehrzahl von Uplinkkanälen zugewiesen sind, und zentraler Endgeräte, die wenigstens einem der Kanäle der Mehrzahl von Downlinkkanälen zugewiesen sind,
Speichern einer Liste von Raum-Zeitsignaturen, die eine Empfangs-Raum-Zeitsignatur für jedes dezentrale Endgerät der Mehrzahl dezentraler Endgeräte und jeden Kanal der Mehrzahl von Uplinkkanälen aufweist, und eine Sende-Raum-Zeitsignatur für jedes dezentrale Endgerät der Mehrzahl dezentraler Endgeräte und jeden Kanal der Mehrzahl von Downlinkkanälen,
Bestimmen der Empfangs-Raum-Zeitsignaturen,
Bestimmen der Sende-Raum-Zeitsignaturen und Verwenden der Liste aktiver dezentraler Endgeräte und Liste von Raum-Zeitsignaturen, um Zuweisungen jedes dezentralen Endgeräts der Liste aktiver dezentraler Endgeräte zu wenigstens einem der Kanäle der Mehrzahl von Uplinkkanälen und wenigstens einem der Kanäle der Mehrzahl von Downlinkkanälen zu bestimmen.

15. Verfahren nach Anspruch 13, das an jeder der Mehrzahl von Basisstationen ausgeführt wird, wobei der gemeinsame Uplinkkanal einer einer Mehrzahl von Uplinkkanälen ist, der gemeinsame Downlinkkanal einer einer Mehrzahl von Downlinkkanälen ist, wobei das Verfahren ferner Folgendes aufweist:

Speichern einer Liste aktiver dezentraler Endgeräte, die eine Liste dezentraler Endgeräte aufweist, die wenigstens einem der Kanäle der Mehrzahl von Uplinkkanälen zugewiesen sind, und dezentraler Endgeräte, die wenigstens einem der Kanäle der Mehrzahl von Downlinkkanälen zugewiesen sind,

Speichern einer Raum-Zeitsignaturliste, die eine Empfangs-Raum-Zeitsignatur für jedes dezentrale Endgerät der Mehrzahl dezentraler Endgeräte und jeden Kanal der Mehrzahl von Uplinkkanälen aufweist, und eine Sende-Raum-Zeitsignatur für jedes dezentrale Endgerät der Mehrzahl dezentraler Endgeräte und jeden Kanal der Mehrzahl von Downlinkkanälen,

Bestimmen der Empfangs-Raum-Zeitsignatur,

Bestimmen der Sende-Raum-Zeitsignaturen,

Berechnen von Raum-Zeit-Demultiplexgewichten für jedes der Endgeräte in der Liste aktiver dezentraler Endgeräte, welchen ein Uplinkkanal zugewiesen ist, und jedes Kanals der Mehrzahl von Uplinkkanälen, dem wenigstens eines der Endgeräte in der Liste aktiver dezentraler Endgeräte zugewiesen ist, wobei die Raum-Zeit-Demultiplexgewichte von den Raum-Zeit-Demultiplexmitteln verwendet werden, um die Uplinksignale zu berechnen,

einen Sende-Raum-Zeitgewichtsprozessor zum Berechnen der Raum-Zeit-Multiplexgewichte für jedes der Endgeräte der Liste der aktiven dezentralen Endgeräte, dem ein Downlinkkanal zugewiesen ist und jedes Kanals der Mehrzahl von Downlinkkanälen, die dem wenigstens einen der Endgeräte in der Liste aktiver dezentraler Endgeräte zugewiesen sind, wobei die Raum-Zeit-Multiplexge-wichte von den Raum-Zeit-Multiplexmitteln verwendet werden, um die gemultiplexten Downlinksignale zu erzeugen,

gemeinsames Bestimmen von Zuweisungen jedes dezentralen Endgeräts der Liste aktiver dezentraler Endgeräte zu wenigstens einem der Kanäle der Mehrzahl von Uplinkkanälen, zu wenigstens einem der Kanäle der Mehrzahl von Downlinkkanälen und zu wenigstens einer der Basisstationen der Mehrzahl von Basisstationen, und

Kommunikation der Zuweisungen zwischen jeder Basisstation in der Mehrzahl von Basisstationen und den gemeinsamen Kanalwählermitteln.

16. Verfahren nach Anspruch 13, wobei die Raum-Zeit-Multiplexgewichtsvektoren für den gemeinsamen Downlinkkanal als die Spalten einer Matrix $W_{tx}$ wie folgt festgelegt werden:

$$[W_{tx}]_k = s_k^t \left[ H_t (H_t^* H_t)^{-1} \right]_{m \ln(k-1)+1} \qquad k = 1,....,n_t \ ,$$

wobei $(\cdot)^*$ die komplexe konjugierte Transponierte einer Matrix bezeichnet, $(\cdot)^{-1}$ die Inverse einer Matrix bezeichnet, $[\cdot]_k$ die k. Spalte einer Matrix bezeichnet, $s_k^t$ die Amplitude des k. Downlinksignals ist und $H_t$ eine Multiplex-Raum-Zeitsignaturmatrix ist, die aus den Sende-Raum-Zeitsignaturen der Mehrzahl dezentraler Endgeräte und des gemeinsamen Downlinkkanals besteht.

17. Schnurloses System an einer Basisstation (1) zum Berechnen von Downlinksignalen, die zu einer Mehrzahl dezentraler Endgeräte zu senden sind, die einen gemeinsamen Downlinkkanal verwenden, wobei das System Folgendes aufweist Sendemittel (14, 18), die eine Mehrzahl von Antennenelementen (18) und Sendern (14) zum Senden von Kombinationen der Downlinksignale zu der Mehrzahl dezentraler Endgeräte aufweisen, die den gemeinsamen Downlinkkanal verwenden, Sende-Raum-Zeitverarbeitungsmittel (13) zum Bestimmen und Speichern von Sende-Raum-Zeitsignaturen für die Mehrzahl dezentraler Endgeräte und zum Bestimmen und Speichern von Raum-Zeitmultiplexgewichten für jedes Antennenelement (18), um es zu erlauben, Downlinksignale zum Senden durch die Antennenelemente (18) zu kombinieren, wobei die Raum-Zeit-Multiplexgewichte für jedes Antennenelement (18) eine Vielzahl L Gewichte aufweist, die der Länge eines Gleitfensters entsprechen, und Raum-Zeit-Multiplexmittel (23), die eine Mehrzahl von Zeitfiltern (29) aufweisen, wobei jedes Zeitfilter (29) eingerichtet ist, um ein Signal zu einem entsprechenden Antennenelement (18) auszugeben und ein kombiniertes Signal (9) und eine komplexe Konjugierte der Raum-Zeit-Multiplexgewichte für das jeweilige Antennenelement (18) zu empfangen, wobei jedes Zeitfilter (29) eine Reihe von Abtastverzögerungen (31) aufweist, die der Länge L des Gleitfensters entsprechen, Multiplikatoren (30), die eingerichtet sind, um zeitverzögerte Versionen des kombinierten Signals (9) mit jeweiligen Raum-Zeit-Multiplexgewichten zu multiplizieren, und einen Addierer (32), der eingerichtet ist, um die Resultate der Multiplikationen zu addieren, um den Ausgang des Zeitfilters (29) zu erzeugen.

**18.** Schnurloses System nach Anspruch 17, wobei die Raum-Zeit-Multiplexmittel (13) eingerichtet sind, um die Raum-Zeit-Multiplexgewichte für den gemeinsamen Downlinkkanal als die Spalten der Matrix $W_{tx}$ wie folgt zu bestimmen:

$$\left[W_{tx}\right]_k = s_k^t \left[H_t(H_t^* H_t)^{-1}\right]_{m\ln(k-1)+1} \qquad k = 1,....,n_t \; ,$$

wobei $(\cdot)^*$ die komplexe konjugierte Transponierte einer Matrix bezeichnet, $(\cdot)^{-1}$ die Inverse einer Matrix bezeichnet, $[\cdot]_k$

die k. Spalte einer Matrix bezeichnet, $s_k^t$ die Amplitude des k. Downlinksignals ist und $H_t$ eine Multiplex-Raum-Zeitsignaturmatrix ist, die aus den Sende-Raum-Zeitsignaturen der Mehrzahl dezentraler Endgeräte und des gemeinsamen Downlinkkanals besteht.

**19.** Verfahren, das an einer Basisstation (1) zum Berechnen von Downlinksignalen ausgeführt wird, die zu einer Mehrzahl dezentraler Endgeräte zu senden sind, die eine Mehrzahl von Antennenelementen (18) und Sendern (14) zum Senden von Kombinationen der Downlinksignale zu der Mehrzahl dezentraler Endgeräte verwenden, die einen gemeinsamen Downlinkkanal verwenden, wobei das Verfahren Folgendes aufweist:

Bestimmen und Speichern von Sende-Raum-Zeitsignaturen für die Mehrzahl dezentraler Endgeräte und Bestimmen und Speichern von Raum-Zeit-Multiplexgewichten für jedes Antennenelement (18), um zu erlauben, dass die Downlinksignale zum Senden durch die Antennenelemente (18) kombiniert werden, wobei die Raum-Zeit-Multiplexgewichte für jedes Antennenelement (18) eine Mehrzahl L Gewichte umfassen, die der Länge eines Gleitfensters entsprechen, und
Raum-Zeit-Multiplexen, indem an jedem der Mehrzahl von Sende-Zeitfiltern (29) ein Signal zu einem entsprechenden Antennenelement (18) ausgegeben wird, und ein kombiniertes Signal (9) und eine komplexe Konjugierte der Raum-Zeit-Multiplexgewichte für das jeweilige Antennenelement (18) empfangen wird, und in jedem Zeitfilter (29) Verwenden einer Reihe von Abtastverzögerungen (31), die der Länge L des Gleitfensters entsprechen, um jedes Signal von einem entsprechenden Antennenelement (19) zu verzögern, Multiplizieren der zeitverzögerten Versionen des kombinierten Signals (9) mit jeweiligen Raum-Zeit-Multiplexgewichten und Addieren der Resultate der Multiplikationen, um den Ausgang des Sende-Zeitfilters (29) zu erzeugen.

**20.** Verfahren nach Anspruch 19, wobei die Raum-Zeit-Multiplexgewichte für den gemeinsamen Downlinkkanal als die Spalten einer Matrix $W_{tx}$ wie folgt bestimmt werden:

$$\left[W_{tx}\right]_k = s_k^t \left[H_t(H_t^* H_t)^{-1}\right]_{m\ln(k-1)+1} \qquad k = 1,....,n_t \; ,$$

wobei $(\cdot)^*$ die komplexe konjugierte Transponierte einer Matrix bezeichnet, $(\cdot)^{-1}$ die Inverse einer Matrix bezeichnet, $[\cdot]_k$ die k. Spalte einer Matrix bezeichnet, $s_k^t$ die Amplitude des k. Downlinksignals ist und $H_t$ eine Multiplex-Raum-Zeitsignaturmatrix ist, die aus den Sende-Raum-Zeitsignaturen der Mehrzahl dezentraler Endgeräte und des gemeinsamen Downlinkkanals besteht.

**Revendications**

**1.** Système sans fil au niveau d'une station de base (1) destiné à calculer des signaux de liaison montante émis depuis une pluralité de terminaux distants en utilisant un canal de liaison montante commun, ledit système comprenant :

un moyen de réception (15, 19) comportant une pluralité d'éléments d'antenne (19) et de récepteurs (15) pour produire des mesures de combinaisons desdits signaux de liaison montante provenant de ladite pluralité de terminaux distants en utilisant ledit canal de liaison montante commun ;
un moyen de traitement spatiotemporel de réception (13) destiné à déterminer et à stocker des signatures spatiotemporelles de réception pour ladite pluralité de terminaux distants en utilisant lesdites mesures, et à déterminer et stocker des poids de démultiplexage spatiotemporel pour chaque élément d'antenne (19) afin de permettre la séparation des signaux de liaison montante d'avec les combinaisons de signaux de liaison montante mesurés par les éléments d'antenne (19), les poids de démultiplexage spatiotemporel, pour chaque élément d'antenne (19), comprenant une pluralité L de poids correspondant à la longueur d'une fenêtre glissante ; et un moyen de démultiplexage spatiotemporel (20) comprenant une pluralité de filtres temporels de réception (22) et un additionneur (21), chaque filtre temporel de réception (22) étant conçu pour recevoir un signal d'un élément d'antenne correspondant (19) et un conjugué complexe des poids de démultiplexage spatiotemporel pour l'élément d'antenne respectif (19), l'additionneur (21) étant conçu pour additionner les sorties des filtres temporels de réception (22) afin de produire des signaux de liaison montante séparés ; chaque filtre temporel de réception (22) comprenant une série de retards d'échantillonnage (27) correspondant à la longueur L de la fenêtre glissante, les multiplieurs (26) étant conçus pour multiplier des versions retardées dans le temps du signal reçu pour un élément d'antenne (19) par des poids de démultiplexage spatiotemporel respectifs, et un additionneur (28) conçu pour additionner les résultats des multiplications afin de générer la sortie du filtre temporel de réception (22).

2. Système sans fil selon la revendication 1, dans lequel ledit moyen de traitement spatiotemporel de réception (13) est conçu pour déterminer lesdits poids de démultiplexage spatiotemporel sous forme de colonnes d'une matrice $W_{RX}$, comme indiqué ci-après :

$$W_{rx} = (H_r P_r H_r^x - R_{nn})^{-1} H_r \overline{P}_r,$$

où $(\cdot)^*$ représente la transposée conjuguée complexe d'une matrice, $(\cdot)^{-1}$ représente l'inverse d'une matrice, $R_{mn}$ est la matrice de covariance du bruit desdits récepteurs, $\overline{P}_r$ est une matrice de puissances d'émission des terminaux distants de ladite pluralité de terminaux distants, et $H_r$ est une matrice de signatures spatiotemporelles de démultiplexage composée desdites signatures spatiotemporelles de réception pour ladite pluralité de terminaux distants et ledit canal de liaison montante commun.

3. Système sans fil selon la revendication 1, dans lequel ledit canal de liaison montante commun est l'un d'une pluralité de canaux de liaison montante et dans lequel ledit moyen de traitement spatiotemporel de réception comprend :

un moyen pour stocker une liste de terminaux distants actifs contenant des terminaux distants affectés à au moins un canal de ladite pluralité de canaux de liaison montante ;
un moyen pour stocker une liste de signatures spatiotemporelles comprenant une signature spatiotemporelle de réception pour chaque terminal distant de ladite pluralité de terminaux distants et chaque canal de ladite pluralité de canaux de liaison montante ;
un moyen de détermination de signatures spatiotemporelles de réception pour déterminer lesdites signatures spatiotemporelles de réception de ladite liste de signatures spatiotemporelles ;
un sélecteur de canal de réception utilisant ladite liste de terminaux distants actifs et ladite liste de signatures spatiotemporelles de réception pour déterminer des affectations de chaque terminal distant de ladite liste de terminaux distants actifs à au moins l'un des canaux de ladite pluralité de canaux de liaison montante ; et
un processeur de poids spatiotemporels de réception pour calculer des poids de démultiplexage spatiotemporel pour chacun des terminaux de ladite liste de terminaux distants actifs et chaque canal de ladite pluralité de canaux de liaison montante affectés à au moins l'un des terminaux de ladite liste de terminaux distants actifs.

4. Système sans fil selon la revendication 1, destiné à calculer des signaux de liaison descendante devant être émis vers une pluralité de terminaux distants en utilisant un canal de liaison descendante commun, le système comprenant en outre :

un moyen d'émission (14, 18) comportant une pluralité d'éléments d'antenne (18) et d'émetteurs (14) pour émettre des combinaisons desdits signaux de liaison descendante vers ladite pluralité de terminaux distants en utilisant ledit canal de liaison descendante commun ;
un moyen de traitement spatiotemporel d'émission (13) pour déterminer et stocker des signatures spatiotemporelles d'émission pour ladite pluralité de terminaux distants, et pour déterminer et stocker des poids de multiplexage spatiotemporel pour chaque élément d'antenne (18) afin de permettre la combinaison de signaux de liaison descendante pour l'émission par les éléments d'antenne (18), les poids de multiplexage spatiotemporel, pour chaque élément d'antenne (18), comprenant une pluralité L de poids correspondant à la longueur d'une fenêtre glissante ; et

un moyen de multiplexage spatiotemporel (23) comprenant une pluralité de filtres temporels d'émission (29), chaque filtre temporel d'émission (29) étant conçu pour fournir en sortie un signal à un élément d'antenne correspondant (18) et recevoir un signal combiné (9) et un conjugué complexe des poids de multiplexage spatiotemporel pour l'élément d'antenne respectif (18) ; chaque filtre temporel d'émission (29) comprenant une série de retards d'échantillonnage (31) correspondant à la longueur L de la fenêtre glissante, des multiplieurs (30) conçus pour multiplier des versions retardées dans le temps du signal combiné (9) par des poids de démultiplexage spatiotemporel respectifs, et un additionneur (32) conçu pour additionner les résultats des multiplications afin de générer la sortie du filtre temporel d'émission (29).

5. Système sans fil selon la revendication 4, dans lequel ledit moyen de réception (15, 19) et ledit moyen d'émission (14, 18) partagent des éléments d'antenne communs en utilisant des duplexeurs.

6. Système sans fil selon la revendication 4, dans lequel ledit moyen de réception (15, 19) et ledit moyen d'émission (14, 18) partagent des éléments d'antenne communs en utilisant des commutateurs d'émission/réception.

7. Système sans fil selon la revendication 4, dans lequel ledit canal de liaison montante commun est l'un d'une pluralité de canaux de liaison montante, ledit canal de liaison descendante commun est l'un d'une pluralité de canaux de liaison descendante, et dans lequel ledit moyen de traitement spatiotemporel de réception (13) et ledit moyen de traitement spatiotemporel d'émission (13) comprennent :

un moyen pour stocker une liste de terminaux distants actifs comprenant une liste de terminaux distants affectés à au moins l'un des canaux de ladite pluralité de canaux de liaison montante et de terminaux distants affectés à au moins l'un des canaux de ladite pluralité de canaux de liaison descendante ;
un moyen pour stocker une liste de signatures spatiotemporelles comprenant une signature spatiotemporelle de réception pour chaque terminal distant de ladite pluralité de terminaux distants et chaque canal de ladite pluralité de canaux de liaison montante, et une signature spatiotemporelle d'émission pour chaque terminal distant de ladite pluralité de terminaux distants et chaque canal de ladite pluralité de canaux de liaison descendante ;
un moyen de détermination de signatures spatiotemporelles de réception pour déterminer lesdites signatures spatiotemporelles de réception ;
un moyen de détermination de signatures spatiotemporelles d'émission pour déterminer lesdites signatures spatiotemporelles d'émission ; et
un sélecteur de canal utilisant ladite liste de terminaux distants actifs et ladite liste de signatures spatiotemporelles pour déterminer des affectations de chaque terminal distant de ladite liste de terminaux distants actifs à au moins l'un des canaux de ladite pluralité de canaux de liaison montante et à au moins l'un des canaux de ladite pluralité de canaux de liaison descendante.

8. Système sans fil selon la revendication 4, au niveau de chacune d'une pluralité de stations de base, dans lequel ledit canal de liaison montante commun est l'un d'une pluralité de canaux de liaison montante, ledit canal de liaison descendante commun est l'un d'une pluralité de canaux de liaison descendante, chaque moyen de traitement spatiotemporel d'émission comprenant :

un moyen pour stocker une liste de terminaux actifs distants comprenant une liste de terminaux distants affectés à au moins l'un des canaux de ladite pluralité de canaux de liaison montante et de terminaux distants affectés à au moins l'un des canaux de ladite pluralité de canaux de liaison descendante ;
un moyen pour stocker une liste de signatures spatiotemporelles comprenant une signature spatiotemporelle de réception pour chaque terminal distant de ladite pluralité de terminaux distants et chaque canal de ladite pluralité de canaux de liaison montante, et une signature spatiotemporelle d'émission pour chaque terminal distant de ladite pluralité de terminaux distants et chaque canal de ladite pluralité de canaux de liaison descendante ;
un moyen de détermination de signatures spatiotemporelles de réception pour déterminer ladite signature spatiotemporelle de réception ;
un moyen de détermination de signatures spatiotemporelles d'émission pour déterminer lesdites signatures spatiotemporelles d'émission ;
un processeur de poids spatiotemporels de réception pour calculer des poids de démultiplexage spatiotemporel pour chacun des terminaux de ladite liste de terminaux distants actifs auxquels un canal de liaison montante est affecté et chaque canal de ladite pluralité de canaux de liaison montante affectés à au moins l'un des terminaux de ladite liste de terminaux distants actifs, lesdits poids de démultiplexage spatiotemporel étant utilisés par ledit moyen de démultiplexage spatiotemporel pour calculer lesdits signaux de liaison montante ;
un processeur de poids spatiotemporels d'émission pour calculer des poids de démultiplexage spatiotemporel pour chacun des terminaux de ladite liste de terminaux distants actifs auxquels un canal de liaison descendante est affecté et chaque canal de ladite pluralité de canaux de liaison descendante affectés à au moins l'un des terminaux de ladite liste de terminaux distants actifs, lesdits poids de multiplexage spatiotemporel étant utilisés par ledit moyen de multiplexage spatiotemporel pour produire lesdits signaux de liaison descendante multiplexés ;
un moyen sélecteur de canal conjoint pour déterminer de manière conjointe des affectations de chaque terminal distant de chacune desdites listes de terminaux distants actifs à au moins l'un des canaux de ladite pluralité de canaux de liaison montante, à au moins l'un des canaux de ladite pluralité de canaux de liaison descendante et à au moins l'une des stations de base de ladite pluralité de stations de base ; et
un moyen de communication pour communiquer lesdites affectations entre chaque station de base de ladite pluralité de stations de base et ledit moyen sélecteur de canal conjoint.

9. Système sans fil selon la revendication 4, dans lequel ledit moyen de multiplexage spatiotemporel (23) est apte à déterminer des vecteurs de poids de multiplexage spatiotemporel pour ledit canal de liaison descendante commun sous forme de colonnes d'une matrice $W_{RX}$, comme indiqué ci-après :

$$[W_{tx}]_k = s_k^t [H_t (H_t^* H_t)^{-1}]_{mL_r(k-1)+1}, \quad k=1,\ldots,\ n_t,$$

où $(\cdot)^*$ représente la transposée conjuguée complexe d'une matrice, $(\cdot)^{-1}$ représente l'inverse d'une matrice, $[\cdot]_k$ représente la $k_{ème}$ colonne d'une matrice, st $s_k^t$ est l'amplitude dudit $k_{ème}$ signal de liaison descendante, et $H_t$ est une matrice de signatures spatiotemporelles de multiplexage composée desdites signatures spatiotemporelles d'émission pour ladite pluralité de terminaux distants et ledit canal de liaison descendante commun.

10. Procédé mis en oeuvre sur une station de base (1) pour calculer des signaux de liaison montante émis par une pluralité de terminaux distants en utilisant un canal de liaison montante commun, ledit procédé comprenant :

la réception, sur une pluralité d'éléments d'antenne (19) et de récepteurs (15), de mesures de combinaisons desdits signaux de liaison montante provenant de ladite pluralité de terminaux distants en utilisant ledit canal de liaison montante commun ;
la détermination et le stockage de signatures spatiotemporelles de réception pour ladite pluralité de terminaux distants en utilisant lesdites mesures et la détermination et le stockage de poids de démultiplexage spatiotemporel pour chaque élément d'antenne (19) afin de permettre la séparation des signaux de liaison montante d'avec les combinaisons de signaux de liaison montante mesurés par les éléments d'antenne (19), les poids de démultiplexage spatiotemporel, pour chaque élément d'antenne (19), comprenant une pluralité L de poids correspondant à la longueur d'une fenêtre glissante ; et
le démultiplexage spatiotemporel par réception d'un signal en provenance d'un élément d'antenne (19) correspondant et d'un conjugué complexe des poids de démultiplexage spatiotemporel pour l'élément d'antenne respectif (19) sur des filtres temporels de réception (22), dans chaque filtre temporel de réception (22) ;
l'utilisation d'une série de retards d'échantillonnage (27) correspondant à la longueur L de la fenêtre glissante afin de retarder chaque signal provenant d'un élément d'antenne correspondant (19),
la multiplication de versions retardées dans le temps des signaux reçus pour un élément d'antenne (19) par des poids de démultiplexage spatiotemporel respectifs, et
l'addition des résultats des multiplications afin de générer la sortie du filtre temporel de réception (22) ; et
l'addition des sorties des filtres temporels de réception (22) afin de produire des signals de liaison montante séparés.

11. Procédé selon la revendication 10, dans lequel lesdits poids de démultiplexage spatiotemporel sont déterminés sous forme des colonnes de la matrice $W_{rx}$, comme indiqué ci-après :

$$W_{rx} = (H_r P_r H_r^x - R_{nn})^{-1} H_r \overline{P_r},$$

où $(\cdot)^*$ représente la transposée conjuguée complexe d'une matrice, $(\cdot)^{-1}$ représente l'inverse d'une matrice, $R_{mn}$ est la matrice de covariance du bruit desdits récepteurs, $\overline{P_r}$ est une matrice de puissances d'émission des terminaux distants de ladite pluralité de terminaux distants, et $H_r$ est une matrice de signatures spatiotemporelles de démultiplexage composée desdites signatures spatiotemporelles de réception pour ladite pluralité de terminaux distants et ledit canal de liaison montante commun.

12. Procédé selon la revendication 10, dans lequel ledit canal de liaison montante commun est l'un d'une pluralité de canaux de liaison montante et la détermination et le stockage des signatures spatiotemporelles de réception comprennent :

le stockage d'une liste de terminaux distants actifs contenant des terminaux distants affectés à au moins un canal de ladite pluralité de canaux de liaison montante ;
le stockage d'une liste de signatures spatiotemporelles comprenant une signature spatiotemporelle de réception pour chaque terminal distant de ladite pluralité de terminaux distants et chaque canal de ladite pluralité desdits canaux de liaison montante ;
la détermination desdites signatures spatiotemporelles de réception de ladite liste de signatures spatiotemporelles ;
l'utilisation de ladite liste de terminaux distants actifs et de ladite liste de signatures spatiotemporelles de réception pour déterminer des affectations de chaque terminal distant de ladite liste de terminaux distants actifs à au moins l'un des canaux de ladite pluralité de canaux de liaison montante ; et
le calcul de poids de démultiplexage spatiotemporel pour chacun des terminaux de ladite liste de terminaux distants actifs et chaque canal de ladite pluralité de canaux de liaison montante affectés à au moins l'un des terminaux de ladite liste de terminaux distants actifs.

13. Procédé selon la revendication 10 pour calculer des signaux de liaison descendante devant être émis vers une pluralité de terminaux distants en utilisant un canal de liaison descendante commun et une pluralité d'éléments d'antenne (18) et d'émetteurs (14) pour émettre des combinaisons desdits signaux de liaison descendante vers ladite pluralité de terminaux distants en utilisant ledit canal de liaison descendante commun, le procédé comprenant en outre :

la détermination et le stockage de signatures spatiotemporelles d'émission pour ladite pluralité de terminaux distants, et la détermination et le stockage de poids de multiplexage spatiotemporel pour chaque élément d'antenne (18) afin de permettre la combinaison de signaux de liaison descendante pour l'émission par les éléments d'antenne (18), les poids de multiplexage spatiotemporel, pour chaque élément d'antenne (18), comprenant une pluralité L de poids correspondant à la longueur d'une fenêtre glissante ; et
le multiplexage spatiotemporel par fourniture en sortie, au niveau de chacun d'une pluralité de filtres temporels d'émission (29), d'un signal à un élément d'antenne correspondant (18) et réception d'un signal combiné (9) et d'un conjugué complexe des poids de multiplexage spatiotemporel pour l'élément d'antenne respectif (18) ; et, dans chaque filtre temporel (29), l'utilisation d'une série de retards d'échantillonnage (31) correspondant à la longueur L de la fenêtre glissante afin de retarder chaque signal provenant d'un élément d'antenne correspondant (19), multiplication de versions retardées dans le temps du signal combiné (9) par des poids de multiplexage spatiotemporel respectifs, et addition des résultats des multiplications afin de générer la sortie du filtre temporel d'émission (29).

14. Procédé selon la revendication 13, dans lequel ledit canal de liaison montante commun est l'un d'une pluralité de canaux de liaison montante, ledit canal de liaison descendante commun est l'un d'une pluralité de canaux de liaison descendante, et dans lequel la détermination et le stockage des signatures spatiotemporelles de réception et desdites signatures spatiotemporelles d'émission comprennent :

le stockage d'une liste de terminaux distants actifs comprenant une liste de terminaux distants affectés à au moins l'un des canaux de ladite pluralité de canaux de liaison montante et de terminaux distants affectés à au moins l'un des canaux de ladite pluralité de canaux de liaison descendante ;
le stockage d'une liste de signatures spatiotemporelles comprenant une signature spatiotemporelle de réception pour chaque terminal distant de ladite pluralité de terminaux distants et chaque canal de ladite pluralité de canaux de liaison montante, et une signature spatiotemporelle d'émission pour chaque terminal distant de ladite pluralité de terminaux distants et chaque canal de ladite pluralité de canaux de liaison descendante ;

la détermination desdites signatures spatiotemporelles de réception ;

la détermination desdites signatures spatiotemporelles d'émission ; et

l'utilisation de ladite liste de terminaux distants actifs et de ladite liste de signatures spatiotemporelles pour déterminer des affectations de chaque terminal distant de ladite liste de terminaux distants actifs à au moins l'un des canaux de ladite pluralité de canaux de liaison montante et à au moins l'un des canaux de ladite pluralité de canaux de liaison descendante.

15. Procédé selon la revendication 13, mis en oeuvre au niveau de chacune d'une pluralité de stations de base, dans lequel ledit canal de liaison montante commun est l'un d'une pluralité de canaux de liaison montante, ledit canal de liaison descendante commun est l'un d'une pluralité de canaux de liaison descendante, le procédé comprenant en outre :

le stockage d'une liste de terminaux actifs distants comprenant une liste de terminaux distants affectés à au moins l'un des canaux de ladite pluralité de canaux de liaison montante et de terminaux distants affectés à au moins l'un des canaux de ladite pluralité de canaux de liaison descendante ;

le stockage d'une liste de signatures spatiotemporelles comprenant une signature spatiotemporelle de réception pour chaque terminal distant de ladite pluralité de terminaux distants et chaque canal de ladite pluralité de canaux de liaison montante, et une signature spatiotemporelle d'émission pour chaque terminal distant de ladite pluralité de terminaux distants et

chaque canal de ladite pluralité de canaux de liaison descendante ;

la détermination de signatures spatiotemporelles de réception pour déterminer ladite signature spatiotemporelle de réception ;

la détermination de signatures spatiotemporelles d'émission pour déterminer lesdites signatures spatiotemporelles d'émission ;

le calcul de poids de démultiplexage spatiotemporel pour chacun des terminaux de ladite liste de terminaux distants actifs auxquels un canal de liaison montante est affecté et chaque canal de ladite pluralité de canaux de liaison montante affectés à au moins l'un des terminaux de ladite liste de terminaux distants actifs, lesdits poids de démultiplexage spatiotemporel étant utilisés par ledit moyen de démultiplexage spatiotemporel pour calculer lesdits signaux de liaison montante ;

un processeur de poids spatiotemporels d'émission pour calculer des poids de multiplexage spatiotemporel pour chacun des terminaux de ladite liste de terminaux distants actifs auxquels un canal de liaison descendante est affecté et chaque canal de ladite pluralité de canaux de liaison descendante affectés à au moins l'un des terminaux de ladite liste de terminaux distants actifs, lesdites poids de multiplexage spatiotemporel étant utilisés par ledit moyen de multiplexage spatiotemporel afin de produire lesdits signaux de liaison descendante multiplexés ;

la détermination conjointe d'affectations de chaque terminal distant de chacune desdites listes de terminaux distants actifs à au moins l'un des canaux de ladite pluralité de canaux de liaison montante, à au moins l'un des canaux de ladite pluralité de canaux de liaison descendante et à au moins l'une des stations de base de ladite pluralité de stations de base ; et

la communication desdites affectations entre chaque station de base de ladite pluralité de stations de base et ledit moyen sélecteur de canal conjoint.

16. Procédé selon la revendication 13, dans lequel lesdits vecteurs de poids de multiplexage spatiotemporel, pour ledit canal de liaison descendante commun, sont déterminés sous la forme des colonnes d'une matrice $W_{tx}$, comme indiqué ci-après :

$$[W_{tx}]_k = s_k^t [H_t (H_t^* H_t)^{-1}]_{mL_t(k-1)+1}, \quad k=1, \ldots, n_t,$$

où $(\cdot)^*$ représente la transposée conjuguée complexe d'une matrice, $(\cdot)^{-1}$ représente l'inverse d'une matrice, $[\cdot]_k$ représente la $k_{ème}$ colonne d'une matrice, $s_k^t$ est l'amplitude dudit $k_{ème}$ signal de liaison descendante, et $H_t$ est une matrice de signatures spatiotemporelles de multiplexage composée desdites signatures spatiotemporelles d'émission pour ladite pluralité de terminaux distants et ledit canal de liaison descendante commun.

**17.** Système sans fil, au niveau d'une station de base (1), pour calculer des signaux de liaison descendante devant être émis vers une pluralité de terminaux distants en utilisant un canal de liaison descendante commun, ledit système comprenant :

un moyen d'émission (14, 18) comportant une pluralité d'éléments d'antenne (18) et d'émetteurs (14) pour émettre des combinaisons desdits signaux de liaison descendante vers ladite pluralité de terminaux distants en utilisant ledit canal de liaison descendante commun ;

un moyen de traitement spatiotemporel d'émission (13) pour déterminer et stocker des signatures spatiotemporelles d'émission pour ladite pluralité de terminaux distants, et pour déterminer et stocker des poids de démultiplexage spatiotemporel pour chaque élément d'antenne (18) afin de permettre la combinaison des signaux de liaison descendante pour l'émission par les éléments d'antenne (18), les poids de multiplexage spatiotemporel, pour chaque élément d'antenne (18), comprenant une pluralité L de poids correspondant à la longueur d'une fenêtre glissante ; et

un moyen de multiplexage spatiotemporel (23) comprenant une pluralité de filtres temporels (29), chaque filtre temporel (29) étant conçu pour fournir en sortie un signal à un élément d'antenne correspondant (18) et recevoir un signal combiné (9) et un conjugué complexe des poids de démultiplexage spatiotemporel, pour l'élément d'antenne respectif (18) ; chaque filtre temporel (29) comprenant une série de retards d'échantillonnage (31) correspondant à la longueur L de la fenêtre glissante, des multiplieurs (30) conçus pour multiplier des versions retardées dans le temps du signal combiné (9) par des poids de multiplexage spatiotemporel respectifs, et un additionneur (32) conçu pour additionner les résultats des multiplications afin de générer la sortie du filtre temporel (29).

**18.** Système sans fil selon la revendication 17, dans lequel ledit moyen de multiplexage spatiotemporel (13) est conçu pour déterminer les poids de multiplexage spatiotemporel pour ledit canal de liaison descendante commun sous la forme des colonnes d'une matrice $W_{tx}$, comme suit :

$$[W_{tx}]_k = s_k^t [H_t (H_t^* H_t)^{-1}]_{mL_t(k-1)+1}, \quad k=1,\ldots, n_t,$$

où $(\cdot)^*$ représente la transposée conjuguée complexe d'une matrice, $(\cdot)^{-1}$ représente l'inverse d'une matrice, $[\cdot]_k$ représente la $k_{ème}$ colonne d'une matrice, $s_k^t$ est l'amplitude dudit $k_{ème}$ signal de liaison descendante, et $H_t$ est une matrice de signatures spatiotemporelles de multiplexage composée desdites signatures spatiotemporelles d'émission pour ladite pluralité de terminaux distants et ledit canal de liaison descendante commun.

**19.** Procédé mis en oeuvre au niveau d'une station de base (1) pour calculer des signaux de liaison descendante devant être émis vers une pluralité de terminaux distants en utilisant une pluralité d'éléments d'antenne (18) et d'émetteurs (14) pour émettre des combinaison desdits signaux de liaison descendante vers ladite pluralité de terminaux distants en utilisant un canal de liaison descendante commun ; le procédé comprenant :

la détermination et le stockage de signatures spatiotemporelles d'émission pour ladite pluralité de terminaux distants, et la détermination et le stockage de poids de multiplexage spatiotemporel pour chaque élément d'antenne (18) afin de permettre la combinaison des signaux de liaison descendante pour l'émission par les éléments d'antenne (18), les poids de multiplexage spatiotemporel, pour chaque élément d'antenne (18), comprenant une pluralité L de poids correspondant à la longueur d'une fenêtre glissante ; et

le multiplexage spatiotemporel par fourniture en sortie, au niveau de chacun d'une pluralité de filtres temporels d'émission (29), d'un signal à un élément d'antenne correspondant (18) et réception d'un signal combiné (9) et d'un conjugué complexe des poids de multiplexage spatiotemporel, pour l'élément d'antenne respectif (18) ; et dans chaque filtre temporel (29), utilisation d'une série de retards d'échantillonnage (31) correspondant à la longueur L de la fenêtre glissante pour retarder chaque signal provenant d'un élément d'antenne correspondant (19), multiplication de versions retardées dans le temps du signal combiné (9) par des poids de démultiplexage spatiotemporel respectifs, et addition des résultats des multiplications afin de générer la sortie du filtre temporel d'émission (29).

**20.** Procédé selon la revendication 19, dans lequel lesdits poids de multiplexage spatiotemporel, pour ledit canal de liaison descendante commun, sont déterminés sous la forme des colonnes d'une matrice $W_{tx}$, comme indiqué ci-après :

$$[W_{tx}]_k = s_k^t [H_t(H_t^* H_t)^{-1}]_{mL_r(k-1)+1}, \quad k=1,\ldots,\ n_t,$$

où $(\cdot)^*$ représente la transposée conjuguée complexe d'une matrice, $(\cdot)^{-1}$ représente l'inverse d'une matrice, $[\cdot]_k$ représente la $k_{ème}$ colonne d'une matrice, $s_k^t$ est l'amplitude dudit $k_{ème}$ signal de liaison descendante, et $H_t$ est une matrice de signatures spatiotemporelles de multiplexage composée desdites signatures spatiotemporelles d'émission pour ladite pluralité de terminaux distants et ledit canal de liaison descendante commun.

**FIG. 1**

FIG. 2

FIG. 3

**FIG. 4**

**FIG. 5**

$d(t)$

$w_{tx}^{i*}$

31a 31b 31L

D D D

30a 30b 30L

$w_{tx}^{i*}(1)$ $w_{tx}^{i*}(2)$ $w_{tx}^{i*}(L_t)$

29i 32

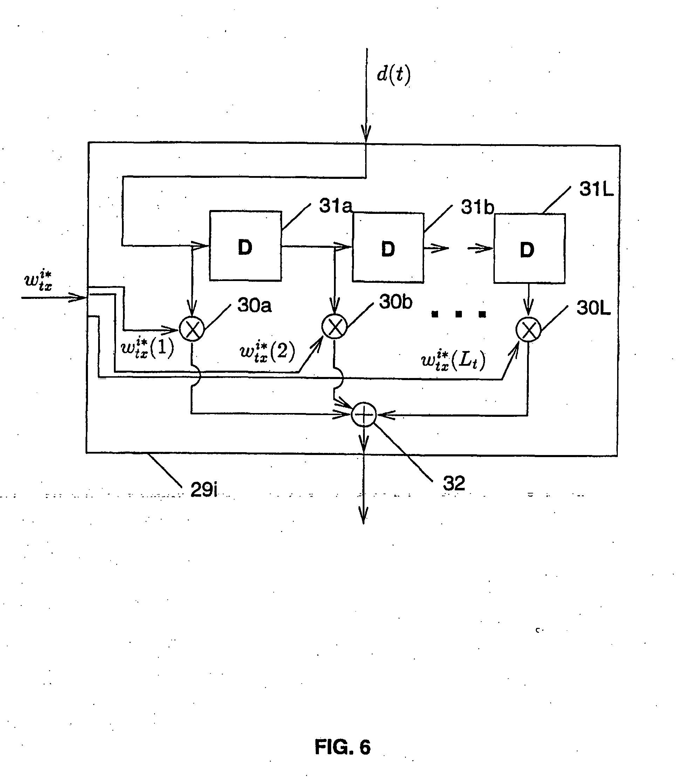

**FIG. 6**

FIG. 7

**FIG. 8**

**FIG. 9**

**FIG. 10**

**FIG. 11**

**EP 0 932 986 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0804858 A
- US 5546090 A
- WO 9818272 A

**Non-patent literature cited in the description**

- **E. MOULINES ; P. DUHAMEL ; J.-F. CARDOSO ; S. MAYRARGUE.** Subspace methods for the blind identification of multichannel FIR filters. *IEEE Transactions on Signal Processing,* February 1995, vol. 43 (2), 516-525